(19) Europäisches Patentamt
European Patent Office
Office européen des brevets

(11) **EP 4 734 282 A1**

(12) **EUROPEAN PATENT APPLICATION**
published in accordance with Art. 153(4) EPC

(43) Date of publication:
**29.04.2026 Bulletin 2026/18**

(21) Application number: **24896530.3**

(22) Date of filing: **26.11.2024**

(51) International Patent Classification (IPC):
*H01Q 1/38* (2006.01)

(52) Cooperative Patent Classification (CPC):
**H01Q 1/22; H01Q 1/24; H01Q 1/36; H01Q 1/38;
H01Q 1/48; H01Q 1/50; H01Q 5/20; H01Q 5/314;
H01Q 5/378; H04M 1/02**

(86) International application number:
**PCT/CN2024/134587**

(87) International publication number:
**WO 2025/113443 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.11.2023  CN 202311626326
17.06.2024  CN 202410785688

(71) Applicant: **Huawei Technologies Co., Ltd.
Shenzhen, Guangdong 518129 (CN)**

(72) Inventors:
• **YU, Dong**
**Shenzhen, Guangdong 518129 (CN)**
• **XUE, Liang**
**Shenzhen, Guangdong 518129 (CN)**
• **CHEN, Liuwei**
**Shenzhen, Guangdong 518129 (CN)**
• **XI, Baokun**
**Shenzhen, Guangdong 518129 (CN)**
• **WANG, Jikang**
**Shenzhen, Guangdong 518129 (CN)**
• **LIU, Huatao**
**Shenzhen, Guangdong 518129 (CN)**

(74) Representative: **Gill Jennings & Every LLP
The Broadgate Tower
20 Primrose Street
London EC2A 2ES (GB)**

(54) **ANTENNA AND TERMINAL DEVICE**

(57)    This application discloses an antenna and a terminal device. The terminal device includes an antenna system. At least a part of a first radiator in a first antenna in the antenna system is distributed on a first side edge of a first body, and at least a part of a second radiator in a second antenna in the antenna system is located on a third side edge of the first body. An inductive structure in the first antenna is connected between a first stub of the first radiator and a ground plane, and the first stub and a second stub of the first radiator are coupled via a capacitive structure. Both the first antenna and the second antenna are configured to support at least one communication frequency band in a frequency range from 698 MHz to 960 MHz. This application can meet a compact layout in the terminal device while achieving a low signal loss and a low ECC for the first antenna and the second antenna.

FIG. 5A

## Description

This application claims priorities to Chinese Patent Application No. 202311626326.0, filed with the China National Intellectual Property Administration on November 28, 2023, entitled "TERMINAL DEVICE", and to Chinese Patent Application No. 202410785688.2, filed with the China National Intellectual Property Administration on June 17, 2024, entitled "ANTENNA AND TERMINAL DEVICE", both of which are incorporated herein by reference in their entireties.

## TECHNICAL FIELD

This application relates to the field of radio frequency communication technologies, and in particular, to an antenna and a terminal device.

## BACKGROUND

Terminal devices such as a mobile phone need to implement communication over a mobile communication network provided by an operator, and further need to have other communication functions, for example, Wi-Fi, Bluetooth, or infrared. For the mobile phone, communication signals are sent and received through antennas. The mobile phone has a plurality of communication manners, and therefore a plurality of antennas need to be disposed in the mobile phone. A diversity (Diversity)/MIMO (Multiple-Input Multiple-Output) technology is a multi-antenna technology that can fully utilize spatial resources, implement multi-transmit and multi-receive through a plurality of antennas, and multiply a system channel capacity without increasing spectrum resources or antenna transmit power, and is considered as a core technology for next-generation mobile communication for its obvious advantages. An ECC (Envelope Correlation Coefficient, envelope correlation coefficient) of an antenna radiation pattern is an important parameter for measuring a diversity gain (diversity gain) of a multi-antenna system. The multi-antenna system requires that each antenna unit in the multi-antenna system has small correlation. To be specific, a low ECC (low signal correlation coefficient) indicates a high diversity gain of a system.

In a design of antennas in a terminal device, a layout of the antennas becomes a design difficulty and focus due to limited size space of the terminal device, especially, for low-frequency antennas (for example, antennas with a communication frequency band in a frequency range from 698 MHz to 960 MHz) with large size. How to arrange a low-frequency main antenna and a low-frequency diversity antenna in the terminal device to ensure a compact layout while achieving a low signal loss and a low ECC is a problem that urgently needs to be resolved in the industry.

## SUMMARY

This application provides an antenna and a terminal device, to arrange an antenna system in limited space, ensuring a compact layout while achieving a low signal loss and a low ECC.

According to a first aspect, an embodiment of this application provides a terminal device, including a device body and an antenna system. The device body includes a first body, a second body, and a hinge, the first body and the second body are connected via the hinge, so that the first body and the second body can be folded or unfolded relative to each other, the first body includes a first side edge, a second side edge, and a third side edge, the first side edge and the second side edge are disposed opposite to each other, the third side edge is connected between the first side edge and the second side edge, and the second side edge is configured to dispose the hinge. The antenna system includes a first antenna, a second antenna, and a radio frequency chip, the first antenna, the second antenna, and the radio frequency chip are all disposed in the first body, the first antenna is configured to generate a first resonance, and the second antenna is configured to generate a second resonance; the first antenna includes a first radiator and a first feeding structure, at least a part of the first radiator is distributed on the first side edge, the second antenna includes a second radiator and a second feeding structure, at least a part of the second radiator is distributed on the third side edge, and the first feeding structure and the second feeding structure are electrically connected to the radio frequency chip; and the first antenna further includes an inductive structure and a capacitive structure, the first radiator includes a first stub and a second stub, the first stub and at least a part of the second stub are distributed at a spacing at different regions of the first side edge, at least the part of the second stub is located on a side that is of the first stub and that is adjacent to the third side edge, an end that is of the first stub and that is away from the second stub is an open end, the first stub includes a first feeding point, a first position, and a first end part, the first feeding point is electrically connected to the first feeding structure, the inductive structure is electrically connected between the first position and a ground plane, the second stub includes a second end part and a grounding point, the grounding point and the second end part are spaced apart, and the second end part and the first end part are coupled via the capacitive structure.

In this solution, the first antenna, the second antenna, and the radio frequency antenna are all disposed in the first body, so that a signal transmission path of an antenna signal does not need to pass through the hinge, thereby meeting a compact layout while achieving a low signal loss of the antenna system. In this solution, the first radiator and the second radiator are respectively disposed on the first side edge and the third side edge that are adjacent to each other, so that directions of currents excited by the first antenna and the second antenna can be orthogonal, and modes excited by the first antenna and the second antenna are a longitudinal mode and a transverse mode that are orthogonal. Specifically, the first antenna excites the longitudinal mode on the first side edge, and the second antenna excites the transverse mode on the third side edge. The two modes are orthogonal, to obtain a low ECC.

In this solution, the inductive structure and the capacitive structure are disposed in the first antenna, so that an overall length of the first radiator in the first antenna can meet a requirement that a position of the open end of the first stub can approach a middle position of the first side edge. In this way, a longitudinal (in an extension direction of the first side edge) component of the first antenna can be increased, that is, the longitudinal mode is more obvious. The inductive structure can implement reduction of electric field strength at the position of the open end of the first stub. The electric field strength at the open end of the first stub is reduced, to improve performance of the first antenna, specifically, help reduce impact of a hand phantom, and improve hand phantom performance of the first antenna. This solution facilitates achieving a lower ECC by incorporating both the inductive structure and the capacitive structure.

In an implementation, a frequency band of the first resonance includes at least one communication frequency band in a frequency range from 698 MHz to 960 MHz.

In an implementation, a frequency band of the second resonance includes at least one communication frequency band in the frequency range from 698 MHz to 960 MHz.

In a possible implementation, one of the first antenna and the second antenna is a main antenna, and the other of the first antenna and the second antenna is a diversity antenna. With reference to the resonance frequency bands of the first antenna and the second antenna, it may be determined that the first antenna is the low-frequency main antenna and the second antenna is the low-frequency diversity antenna. In this solution, the radiator in the low-frequency main antenna and the radiator in the low-frequency diversity antenna are distributed on the first side edge and the third side edge, so that the antenna system is disposed on side edges of the terminal device, and an internal antenna arrangement solution of the terminal device with a compact structure is obtained.

In a possible implementation, the antenna system includes a circuit side TAS switch. The circuit side TAS switch is configured to switch between the first antenna and the second antenna, so that the first antenna can be the main antenna or the diversity antenna, and the second antenna can be the diversity antenna or the main antenna. In this solution, the circuit side TAS switch is disposed to connect to the first antenna and the second antenna, so that the main antenna and the diversity antenna can be flexibly disposed based on requirements of an application environment. This helps optimize performance of the antenna system.

In a possible implementation, all regions of the second stub are distributed on the first side edge, and the grounding point is located at a position of the second stub and that is adjacent to the third side edge. In this solution, the first antenna excites the longitudinal mode on the first side edge, and the second antenna excites the transverse mode on the third side edge. The two modes are orthogonal, achieving the low ECC. Specifically, an ECC between the first antenna and the second antenna may be 0.28.

In a possible implementation, the first feeding point, the first position, and the first end part are sequentially arranged in the extension direction of the first side edge on the first stub, a part that is of the first stub and that is from the first feeding point to the first position and the inductive structure are configured to jointly generate a third resonance, a frequency difference between the third resonance and the first resonance is f, and the first resonance is f1, where $35\% \leq f'/f1 \leq 60\%$. In this solution, a range of a ratio of the frequency difference between the first resonance and the third resonance to the first resonance is limited, to help ensure that the antenna has good radiation efficiency, and avoid an efficiency dip of the antenna caused by the third resonance approaching a position of the first resonance position.

In a possible implementation, a frequency band of the first resonance includes at least one communication frequency band in a frequency range from 698 MHz to 960 MHz, the first feeding point, the first position, and the first end part are sequentially arranged in the extension direction of the first side edge on the first stub, a part that is of the first stub and that is from the first feeding point to the first position and the inductive structure are configured to jointly generate a third resonance, and a frequency difference between the third resonance and the first resonance is in a range from 300 MHz to 500 MHz. In this solution, a range of the frequency difference between the first resonance and the third resonance is limited, to avoid an efficiency dip of the antenna caused by the third resonance approaching a position of the first resonance position.

In a possible implementation, a sum of an electrical length from the first feeding point to the first position and an electrical length of the inductive structure is a quarter of a wavelength corresponding to a resonance frequency of the third resonance. In this solution, the inductive structure introduced into the first antenna has a high loading function on a three-quarter mode. A frequency position of the three-quarter mode is adjusted upward, to avoid that an efficiency dip between two resonances caused by a three-quarter mode resonance approaching the position of the first resonance falls in a target frequency band range. In addition, a quarter mode resonance mode can be implemented from the first feeding point to the ground via the inductive structure, which may be understood as that the inductive structure is excited to generate a C mode resonance. The open end of the first stub of the first radiator is the end that is of the first stub and that is away from the second stub, and is a thumb region of a hand model. In other words, in an in-use state, the open end of the first stub is a position touched by a thumb when the terminal device is held. A stronger electric field at the open end of the first stub causes greater impact on hand model loading and absorption. Therefore, the electric field strength at the open end of the first stub can be reduced, to improve performance of the first antenna. In this application, the inductive structure is electrically connected between the first stub and the ground plane, to form the quarter mode resonance mode, so that the electric field strength at the open end of the first stub can be reduced, thereby helping reduce impact of the hand model and improve hand model performance of the first antenna.

In a possible implementation, the first feeding point, the first position, and the first end part are sequentially arranged in the extension direction of the first side edge on the first stub, a part that is of the first stub and that is from the first feeding point to the first position and the inductive structure are configured to jointly generate a third resonance, and a frequency difference between the third resonance and the first resonance is in a range from 300 MHz to 500 MHz. For example, in an implementation, the frequency difference between the third resonance and the first resonance is from 350 MHz to 450 MHz. For another example, in an implementation, the frequency difference between the third resonance and the first resonance is 400 MHz±20 MHz. In this solution, the frequency difference between the third resonance and the first resonance is limited, and a range of the frequency difference is limited to from 300 MHz to 500 MHz. In this solution, a position of the third resonance is limited, to avoid an efficiency dip of the antenna caused by the third resonance approaching a position of the first resonance position.

In a possible implementation, the inductive structure includes a first connection segment, a second connection segment, and a main stub connected between the first connection segment and the second connection segment, the first connection segment is connected between one end of the main stub and the ground plane, and the second connection segment is connected between the other end of the main stub and the first position. In this solution, the main stub is designed as a metal strap or strip structure, and the main stub may be disposed in a spacing between a side frame and a main board of the terminal device, to help save space inside the terminal device. Connection between the main stub and the ground plane may be implemented by welding the second connection segment and by connecting a conductive adhesive. Connection between the main stub and the first stub may be implemented by welding the first connection segment and by connecting a conductive adhesive. This facilitates assembly operations.

In an implementation, the main stub and a middle frame of the terminal device may be integrally formed.

In an implementation, the main stub and the first stub of the first radiator are integrally formed, and a range of a length of the main stub may be from 20 mm to 30 mm.

In a possible implementation, in the extension direction of the first stub, the first connection segment is located between the second connection segment and the first feeding point. In a possible implementation, in the extension direction of the first stub, the second connection segment is located between the first connection segment and the first feeding point.

In a possible implementation, in the extension direction of the first stub, the first connection segment is located between the second connection segment and the first feeding point, and a distance between the second connection segment and the first end part is less than or equal to one sixteenth of a wavelength corresponding to a resonance frequency of the first resonance. In this solution, an upper limit of the distance between the second connection segment and the first end part is limited, to help improve hand model performance of the first antenna.

In a possible implementation, in the extension direction of the first stub, the first connection segment is located between the second connection segment and the first feeding point, and a distance between the second connection segment and the first end part is less than or equal to a quarter of a length of the first stub. In a specific solution, the distance between the second connection segment and the first end part is less than or equal to one eighth of the length of the first stub.

In a possible implementation, the inductive structure includes a lumped inductor, and the lumped inductor is electrically connected between the first position and the ground plane. In this solution, the lumped inductor is disposed between the first position and the ground plane, so that an inductance value or electrical length of the inductive structure is easy to adjust, and a position at which the lumped inductor is connected to the first stub is easy to adjust. In other words, the first position may be disposed based on a specific requirement. Therefore, this solution helps the inductive structure be more easily used to improve antenna efficiency of the antenna in a target frequency band, thereby improving hand model performance of the first antenna.

In a possible implementation, a distance between an equivalent central position of the inductive structure in the extension direction of the first stub and the first end part is less than or equal to one eighth of a wavelength corresponding to a resonance frequency of the first resonance. In this solution, the distance between the equivalent central position of the inductive structure on the first stub and the first end part is limited, to help adjust an electric field of the open end of the first stub and an electric field of the first end part.

In a possible implementation, the frequency band of the first resonance includes the at least one communication frequency band in the frequency range from 698 MHz to 960 MHz, and a distance between an equivalent central position of the inductive structure in the extension direction of the first stub and the first end part is less than or equal to 20 mm; or a distance between an equivalent central position of the inductive structure in the extension direction of the first stub and the first end part is less than or equal to half of the length of the first stub.

In a possible implementation, a distance between an equivalent central position of the inductive structure in the extension direction of the first stub and the first end part is less than or equal to three eighths of a length of the first stub.

In a possible implementation, a distance between an equivalent central position of the inductive structure in the extension direction of the first stub and the first end part is less than or equal to 15 mm.

In a possible implementation, an equivalent inductance value of the inductive structure is a fixed value, and a range of the equivalent inductance value is greater than or equal to 4 nH and less than or equal to 7 nH. In a possible implementation, an equivalent inductance value of the inductive structure is adjustable, and a range of the equivalent inductance value is greater than or equal to 2 nH and less than or equal to 7 nH. In this application, the inductance value of the inductive structure is limited, to help adjust the electric field strength at the open end of the first stub via the inductive structure, reduce impact on the hand model loading and absorption, and improve hand model performance. When the inductance of the inductive structure is the fixed value, optimization may be performed for one frequency band, and impact on another frequency band is small. When the inductance of the inductive structure is adjustable, different inductance values may be configured for different frequency bands, optimization is performed by frequency band, and an inductance value range is larger.

In a possible implementation, the length of the first stub is between a quarter and half of the wavelength corresponding to the resonance frequency of the first resonance, and a length of the second stub is between one sixth and a quarter of the wavelength corresponding to the resonance frequency of the first resonance. In this embodiment of this application, an electrical length of the first stub and an electrical length of the second stub are limited, to help adjust electric fields at two positions of the open end and the first end part of the first stub.

In a possible implementation, a range of a ratio of the length of the first stub to the length of the second stub is greater than or equal to 1/3 and less than or equal to 1.

In a possible implementation, a range of an equivalent capacitance value of the capacitive structure is greater than or equal to 0.5 pF and less than or equal to 3 pF. In this solution, the capacitive structure is disposed, and the range of the equivalent capacitance value of the capacitive structure is limited, to help adjust the electric fields at the two positions of the open end and the first end part of the first stub.

In a possible implementation, the capacitive structure includes a capacitive component, the capacitive component is located at a position adjacent to the first side edge in the terminal device and disposed on a circuit board, and two ends of the capacitive component are electrically connected to the first end part and an end that is of the second stub and that is adjacent to the first end part, respectively.

In a possible implementation, the antenna system further includes a parasitic stub, the parasitic stub antenna is disposed on the second body, the parasitic stub and the first antenna are stacked when the terminal device is in the folded state, the parasitic stub includes a first branch and a second branch, the first branch and the second branch are spaced apart, one end that is of the first branch and that is adjacent to the second branch is grounded, one end that is of the second branch and that is away from the first branch is grounded, and when the terminal device is in the folded state, the first branch and the first stub are stacked and opposite to each other and the second branch and the second stub are stacked and opposite to each other. In this solution, the parasitic stub is disposed, and the parasitic stub can be excited to generate a C mode resonance, thereby improving hand model performance.

In a possible implementation, the antenna system further includes an inductive structure, and the inductive structure is connected between the parasitic stub and the ground plane. The inductive structure may be disposed to adjust electric fields at positions of gaps at two ends of the first branch, and help improve efficiency of a right-hand mode of the antenna system.

In a possible implementation, all parts of the second radiator are located on the third side edge. In this solution, all the parts of the second radiator are limited to be located on the third side edge, to help the second antenna excite the transverse mode on the third side edge. Therefore, the mode of the second antenna and the mode of the first antenna are orthogonal, thereby obtaining the low ECC.

In a possible implementation, a second feeding point is disposed on the second radiator, the second feeding point is electrically connected to the second feeding structure, a first end of the second radiator is an open end, a second end of the second radiator is a ground end, the ground end is adjacent to the second side edge relative to the open end of the second radiator, and an extension direction of the second radiator is perpendicular to the extension direction of the first side edge.

In a possible implementation, the grounded end of the second radiator is adjacent to the second side edge, and the second feeding point of the second radiator is located between the first side edge and the second side edge.

In a possible implementation, the second radiator extends from the first side edge to the third side edge, the second radiator includes a first part and a second part that are interconnected as a whole, the second part is located on the third side edge, the first part is located on the first side edge, an end that is of the first part and that is away from the second part is connected to the second stub of the first radiator and is grounded, and the second feeding point of the second radiator is located on the second part.

In a possible implementation, the first body further includes a fourth side edge, the fourth side edge and the third side edge are disposed opposite to each other, the antenna system further includes a third antenna, an operating frequency band of the third antenna includes at least one communication frequency band in a frequency range from 1700 MHz to 2700 MHz, the third antenna includes a third radiator and a third feeding structure, and the third feeding structure is electrically connected to the radio frequency chip; and

at least a part of the third radiator is distributed on the fourth side edge; or at least a part of the third radiator is distributed on the first side edge, and the third radiator distributed on the first side edge is located on a side that is of the first radiator and that is away from the third side edge.

In a possible implementation, a button is disposed on the first side edge, the button is located on a side that is of the first stub and that is away from the second stub, the button and the first stub are insulated from each other, and the part of the third radiator is located at the button.

In a possible implementation, at least a part of the third radiator is located on the third side edge, and is located at a position between the second radiator and the first radiator.

In a possible implementation, the terminal device is a smartphone; or when the terminal device is in the folded state, the first side edge is a long edge, the third side edge is a short edge, a size range of the first side edge is less than or equal to 170 mm, and a size range of the third side edge is less than or equal to 80 mm.

According to a second aspect, an embodiment of this application provides an antenna, including a first feeding structure, a first radiator, an inductive structure, and a capacitive structure. The first radiator includes a first stub and a second stub, the first stub and the second stub are distributed at a spacing, an end that is of the first stub and that is away from the second stub is an open end, the first stub includes a first feeding point, a first position, and a first end part, the first feeding point is electrically connected to the first feeding structure, the inductive structure is electrically connected between the first position and a ground plane, the second stub includes a second end part and a grounding point, the grounding point and the second end part are spaced apart, the second end part and the first end part are coupled via the capacitive structure, and the antenna is configured to generate a first resonance; and a part that is of the first stub and that is from the first feeding point to the first position and the inductive structure are configured to jointly generate a third resonance, a frequency difference between the third resonance and the first resonance is f', and the first resonance is f1, where $35\% \le f'/f1 \le 60\%$. In this solution, a range of a ratio of the frequency difference between the first resonance and the third resonance to the first resonance is limited, to help ensure that the antenna has good radiation efficiency, and avoid an efficiency dip of the antenna caused by the third resonance approaching a position of the first resonance position.

In a possible implementation, the inductive structure includes a first connection segment, a second connection segment, and a main stub connected between the first connection segment and the second connection segment, the first connection segment is connected between one end of the main stub and the ground plane, and the second connection segment is connected between the other end of the main stub and the first position.

In a possible implementation, in an extension direction of the first stub, the first connection segment is located between the second connection segment and the first feeding point; or the second connection segment is located between the first connection segment and the first feeding point.

In a possible implementation, in the extension direction of the first stub, the first connection segment is located between the second connection segment and the first feeding point, and a distance between the second connection segment and the first end part is less than or equal to a quarter of a length of the first stub.

In a possible implementation, in the extension direction of the first stub, the first connection segment is located between the second connection segment and the first feeding point, and a distance between the second connection segment and the first end part is less than or equal to one eighth of a length of the first stub.

In a possible implementation, the inductive structure includes a lumped inductor, and the lumped inductor is electrically connected between the first position and the ground plane.

In a possible implementation, a distance between an equivalent central position of the inductive structure in the extension direction of the first stub and the first end part is less than or equal to 20 mm.

In a possible implementation, a distance between an equivalent central position of the inductive structure in the extension direction of the first stub and the first end part is less than or equal to half of a length of the first stub.

In a possible implementation, a distance between an equivalent central position of the inductive structure in the extension direction of the first stub and the first end part is less than or equal to three eighths of a length of the first stub.

In a possible implementation, a frequency band of the first resonance includes at least one communication frequency band in a frequency range from 698 MHz to 960 MHz. In an implementation, a frequency band of the second resonance includes at least one communication frequency band in the frequency range from 698 MHz to 960 MHz.

In a possible implementation, an equivalent inductance value of the inductive structure is a fixed value, and a range of the equivalent inductance value is greater than or equal to 4 nH and less than or equal to 7 nH; or an equivalent inductance value of the inductive structure is adjustable, and a range of the equivalent inductance value is greater than or equal to 2 nH and less than or equal to 7 nH. When the inductance of the inductive structure is the fixed value, optimization may be performed for one frequency band, and impact on another frequency band is small. When the inductance of the inductive structure is adjustable, different inductance values may be configured for different frequency bands, optimization is performed by frequency band, and an inductance value range is larger.

In a possible implementation, the frequency difference between the third resonance and the first resonance is in a range from 300 MHz to 500 MHz.

In a possible implementation, the length of the first stub is between a quarter and half of the wavelength corresponding to the resonance frequency of the first resonance, and a length of the second stub is between one sixth and a quarter of the wavelength corresponding to the resonance frequency of the first resonance.

In a possible implementation, a range of a ratio of the length of the first stub to the length of the second stub is greater than or equal to 1/3 and less than or equal to 1.

In a possible implementation, a range of an equivalent capacitance value of the capacitive structure is greater than or equal to 0.5 pF and less than or equal to 3 pF.

In a possible implementation, when a frequency of the first resonance is 960 MHz, a range of a frequency of a three-quarter mode excited by the antenna is between 135% of the frequency of the first resonance and 160% of the frequency of the first resonance.

**BRIEF DESCRIPTION OF DRAWINGS**

FIG. 1A is a diagram of a terminal device at a position in a process of transitioning from an unfolded state to a folded state according to an implementation;
FIG. 1B is a diagram of the terminal device shown in FIG. 1A in the folded state;
FIG. 2A is a diagram of a terminal device at a position in a process of transitioning from an unfolded state to a folded state according to an implementation;
FIG. 2B is a diagram of the terminal device shown in FIG. 2A in the folded state;
FIG. 3A is a diagram of a terminal device at a position in a process of transitioning from an unfolded state to a folded state according to an implementation;

FIG. 3B is a diagram of the terminal device shown in FIG. 3A in the folded state;
FIG. 4 is a diagram of a hardware architecture of an antenna system in a terminal device according to an implementation of this application;
FIG. 5A is a diagram of a plane of an antenna system in a terminal device according to an implementation of this application;
FIG. 5B is a diagram of current distribution of each resonance mode of a first antenna in the implementation shown in FIG. 5A;
FIG. 6 is a diagram of a plane of a partial structural position relationship of a terminal device and a diagram of current distribution of each resonance mode of a first antenna according to an implementation of this application;
FIG. 7 is a diagram of a plane of a partial structural position relationship of a terminal device according to an implementation of this application;
FIG. 8 is a diagram of a plane of a partial structural position relationship of a terminal device according to an implementation of this application;
FIG. 9A is a diagram of a plane of an antenna system in a terminal device according to an implementation of this application;
FIG. 9B is a diagram of a plane of an antenna system in a terminal device according to an implementation of this application;
FIG. 10 is a diagram of S22 (output matching) of a first antenna and a second antenna in an antenna system in a terminal device according to an implementation of this application;
FIG. 11 is a diagram of system total efficiency and radiation efficiency of a first antenna and a second antenna in an antenna system in a terminal device according to an implementation of this application;
FIG. 12 is a diagram of comparison between a first antenna in which an inductive structure is disposed in an antenna system in a terminal device according to an implementation of this application and a first antenna in which no inductive structure is disposed;
FIG. 13 is a diagram of comparison between a connection manner in which an inductive structure in the implementation shown in FIG. 5B is used and a connection manner in which an inductive structure in the implementation shown in FIG. 6 is used in a terminal device according to an implementation of this application;
FIG. 14 is a diagram of an architecture of an antenna system in a terminal device according to an implementation of this application;
FIG. 15 is curves of S22 (output matching) of a first antenna and a second antenna and a curve of isolation between the first antenna and the second antenna in the antenna system in the terminal device according to the implementation shown in FIG. 14;
FIG. 16 is a diagram of curves of system total efficiency and radiation efficiency of the antenna system in the terminal device according to the implementation shown in FIG. 14;

FIG. 17 is a diagram of an antenna system in a terminal device in a state in which a first body and a second body are folded relative to each other;

FIG. 18 is a diagram of an antenna system in a terminal device in a state in which a first body and a second body are folded relative to each other;

FIG. 19 is a diagram of comparison between an S11 curve of the antenna system according to the implementation shown in FIG. 17 and an S11 curve of the antenna system according to the implementation shown in FIG. 18;

FIG. 20 is a diagram of comparison between radiation efficiency and system efficiency of the antenna system according to the implementation shown in FIG. 17 and radiation efficiency and system efficiency of the antenna system according to the implementation shown in FIG. 18 in a left-handed mode; and

FIG. 21 is a diagram of comparison between radiation efficiency and system efficiency of the antenna system according to the implementation shown in FIG. 17 and radiation efficiency and system efficiency of the antenna system according to the implementation shown in FIG. 18 in a right-handed mode.

## DESCRIPTION OF EMBODIMENTS

Explanation of some terms

C mode and D mode: A C mode and D mode are defined based on a flow direction of a current generated in an antenna. When a current generated on an antenna radiator is a current radiating outward in all directions from a grounding point (for example, a current flowing symmetrically from the grounding point), the antenna is defined in the C mode; or when the current generated on the antenna radiator flows in a same direction, the antenna is defined in the D mode. A patch (patch) antenna is used as an example. The patch antenna operating in the C mode at least needs one grounding point, and when the grounding point is at a specific distance from a periphery of a patch antenna radiator, a current generated on the patch antenna radiator radiates symmetrically outward in all directions from the grounding point, where radiation is implemented by both the patch antenna radiator and a ground plane; or the patch antenna operating in the D mode does not need a grounding point (it should be understood that the patch antenna operating in the D mode may also have a grounding point), and the current generated on the patch antenna radiator flows in a same direction, where radiation is mainly implemented by the patch antenna radiator.

Coupling: Coupling may be understood as direct coupling and/or indirect coupling, and a "coupling connection" may be understood as a direct coupling connection and/or an indirect coupling connection. The direct coupling may also be referred to as an "electrical connection", and may be understood as physical contact and electrical conduction of components; or may be understood as a form in which different components in a line structure are connected through a physical line that may transmit an electrical signal, for example, a copper foil or a conductive wire of a printed circuit board (printed circuit board, PCB). The "indirect coupling" may be understood as electrical conduction of two conductors through air or without contact. In an embodiment, the indirect coupling may also be referred to as capacitive coupling. For example, signal transmission is implemented by forming an equivalent capacitor through coupling in a gap between two spaced conductive members.

Radiator (or antenna stub): A radiator (or an antenna stub) is an apparatus configured to receive/send electromagnetic wave radiation in an antenna. In some cases, an "antenna" is understood as the radiator (or antenna stub) in a narrow sense, and converts guided wave energy from a transmitter into a radio wave, or converts a radio wave into guided wave energy, to radiate and receive a radio wave. Modulated high-frequency current energy (or guided wave energy) generated by the transmitter is transmitted to a transmit radiator (or antenna stub) via a feeder wire. The radiator (or antenna stub) converts the energy into specific polarized electromagnetic wave energy and radiates the energy in a required direction. A receive radiator (or antenna stub) converts specific polarized electromagnetic wave energy from a specific direction of space into modulated high-frequency current energy, and transmits the modulated high-frequency current energy to an input end of a receiver through a feeder wire.

The radiator (or antenna stub) may include a conductor having a specific shape and size, for example, a linear radiator (or antenna stub) or a sheet-like radiator (or antenna stub). A specific shape is not limited in this application. In an embodiment, the linear radiator (or antenna stub) may be referred to as a linear antenna. In an embodiment, the linear radiator may be implemented by a conductive side frame, and may also be referred to as a side frame antenna. In an embodiment, the linear radiator (or antenna stub) may be implemented by a bracketed conductor, and may also be referred to as a bracketed antenna. In an embodiment, a wire diameter (for example, including a thickness and a width) of the linear radiator or a radiator of the linear antenna is far less than a wavelength (for example, a dielectric wavelength) (for example, is less than 1/16 of the wavelength), and a length may be compared with the wavelength (for example, the dielectric wavelength) (for example, the length is approximately 1/8 of the wavelength, or 1/8 to 1/4 of the wavelength, or 1/4 to 1/2 of the wavelength, or greater). Main forms of the linear antenna include a dipole antenna, a half-wave dipole antenna, a monopole antenna, a loop antenna, an inverted F antenna (also referred to as an IFA, Inverted F Antenna), and a planar inverted F antenna (also referred to as a PIFA, Planar Inverted F Antenna). For example, for the dipole antenna, each dipole antenna usually includes two radiation stubs, and each stub is fed by a feed part from a feeding end of the radiation stub. For example, the inverted F antenna (Inverted F Antenna, IFA) may be considered as being obtained by adding a grounding path to a monopole antenna. The IFA antenna has a feeding point and a grounding point, and is referred to as the inverted F antenna because a side view of the IFA is in an inverted F shape. In an embodiment, the sheet-like radiator (or antenna stub) may include a microstrip antenna or a patch (patch) antenna. In an embodiment, the sheet-like radiator (or antenna stub) may be implemented by a planar conductor (for example, a conductive sheet or a conductive coating). In an embodiment, the sheet-like radiator (or antenna stub) may include the conductive sheet, for example, a copper sheet. In an embodiment, the sheet-like radiator (or antenna stub) may include the conductive coating, for example, silver paste. The sheet-like radiator may be in a circular shape, a rectangular shape, a ring shape, or the like. A specific shape is not limited in this application. A structure of the microstrip antenna generally includes a dielectric substrate, a radiator (or an antenna stub), and a ground plane, where the dielectric substrate is disposed between the radiator (or antenna stub) and the ground plane.

The radiator (or antenna stub) may also include a slot or a gap formed on a conductor, for example, a closed or semi-closed slot or gap formed on a grounded conductor surface. In an embodiment, a radiator with a slot or a gap may be referred to as a slot antenna or a slotted antenna for short. In an embodiment, for the slot or the gap of the slot antenna/slotted antenna, a radial size (for example, including a width) is much less than a wavelength (for example, a dielectric wavelength) (for example, less than 1/16 of the wavelength), and a length size may be comparable to the wavelength (for example, the dielectric wavelength) (for example, the length is approximately 1/8 of the wavelength, or 1/8 to 1/4 of the wavelength, or 1/4 to 1/2 of the wavelength, or greater). In an embodiment, a radiator with a closed slot or gap may be referred to as a closed slot antenna for short. In an embodiment, a radiator with a semi-closed slot or gap (for example, an opening is additionally provided on the closed slot or gap) may be referred to as an open slot antenna for short. In some embodiments, the gap is long bar-shaped. In some embodiments, a length of the gap is approximately half of the wavelength (for example, the dielectric wavelength). In some embodiments, the length of the gap is approximately an integer multiple of the wavelength (for example, a one-fold dielectric wavelength). In some embodiments, the gap may be used for feeding through a transmission line bridged on one side or two sides of the gap. In this way, a radio frequency electromagnetic field is excited on the gap, and an electromagnetic wave is radiated to space. In an embodiment, a radiator of the slot antenna or the slotted antenna may be implemented by a conductive side frame that is grounded at two ends, and may also be referred to as a side frame antenna. In this embodiment, it may be considered that the slot antenna or the slotted antenna includes a linear radiator, and the linear radiator is spaced apart from the ground plane and is grounded at two ends of the radiator, to form a closed or semi-closed slot or gap. In an embodiment, the radiator of the slot antenna or the slotted antenna may be implemented by a bracketed conductor that is grounded at two ends, and may also be referred to as a bracketed antenna.

Feed source/Feed circuit: A feed source/feed circuit is a combination of all circuits configured to receive and transmit radio frequency signals. The feed circuit may include a transceiver (transceiver) and a radio frequency front end (RF front end) circuit. In some cases, the "feed circuit" is a radio frequency chip (RFIC, Radio Frequency Integrated Circuit) in a narrow sense, and the RFIC may be considered to include a radio frequency front end chip and the transceiver. The feed circuit has a function of converting a radio wave (for example, a radio frequency signal) and an electrical signal (for example, a digital signal). Usually, the feed circuit is considered as a part of radio frequency. The feed circuit may include a transmit path and a receive path, to implement a function of receiving and sending radio frequency signals of the antenna system. An antenna system in a terminal device provided in this application includes one feed and at least two antennas, and the feed circuit includes a transmit path and at least two receive paths.

In some embodiments, an electronic device may further include a test base (which is also referred to as a radio frequency base or a radio frequency test base). A coaxial cable may be inserted into the test base, to test a characteristic of a radio frequency front end circuit or the radiator of the antenna through the cable. The radio frequency front end circuit may be considered as a circuit part coupled between the test base and the transceiver.

In some embodiments, the radio frequency front end circuit may be integrated into the radio frequency front end chip of the electronic device, or the radio frequency front end circuit and the transceiver may be integrated into the radio frequency chip of the electronic device.

It should be understood that any two of a first feed circuit, a second feed circuit, ..., and an $N^{th}$ feed circuit in this application may share a same transceiver, for example, transmit a signal through a radio frequency channel in the transceiver (for example, a pin (pin) of the radio frequency chip); and may further share a radio frequency front end circuit, for example, process the signal via a switch or an amplifier in the radio frequency front end.

It should be further understood that two of the first feed circuit, the second feed circuit, ..., and the $N^{th}$ feed circuit in this application usually correspond to two radio frequency test bases of the electronic device.

Matching circuit: A matching circuit is a circuit related to adjustment of a radiation characteristic of an antenna. In an embodiment, the matching circuit is coupled between the feed circuit and a corresponding radiator. Generally, the matching circuit is coupled between the test base and the radiator. In an embodiment, the matching circuit has a function of impedance matching and/or frequency tuning. Usually, the matching circuit is considered as a part of an antenna.

Tuning circuit: A tuning circuit is a circuit related to adjustment of a resonance frequency of an antenna. In an embodiment, the tuning circuit is coupled between the radiator and the ground plane. In an embodiment, the tuning circuit is coupled between the feed circuit and the radiator. In an embodiment, the tuning circuit has a function of impedance matching and/or frequency tuning. Usually, the tuning circuit is considered as a part of an antenna.

In an embodiment, the matching circuit/tuning circuit may include a switch and/or an electronic element/component, and the switch may be an electronic element/component configured to switch a coupling connection of the radiator. The switch in the matching circuit/tuning circuit may also be referred to as an antenna switch. In an embodiment, the matching circuit/tuning circuit may include a filter circuit.

Grounding structure/Feeding structure: A grounding structure/feeding structure may include a connection member, for example, a metal spring. The radiator is connected to the ground plane in a coupling manner via the grounding structure/connected to the feed circuit in a coupling manner via the feeding structure. In some embodiments, the feeding structure may include a transmission line/feed line, and the grounding structure may include a ground cable.

Feed line: A feed line, also referred to as a transmission line, is a connection line between a transceiver of an antenna and a radiator. The transmission line can directly transmit current waves or electromagnetic waves with different frequencies and forms. A joint between the radiator and the transmission line is usually referred to as a feeding point. The transmission line includes a conducting-wire transmission line, a coaxial-line transmission line, a waveguide, a microstrip, or the like. The transmission line may include a bracketed antenna body, a glass antenna body, or the like based on different implementation forms. The transmission line may be implemented by using LCP (Liquid Crystal Polymer, liquid crystal polymer material), an FPC (Flexible Printed Circuit, flexible printed circuit), a PCB (Printed Circuit Board, printed circuit board), or the like based on different carriers.

Ground/Ground plane: A ground/ground plane may generally represent at least a part of any grounding plane, or grounding plate, or grounding metal layer of an electronic device (for example, a mobile phone), or at least a part of any combination of any grounding plane, grounding plate, grounding part, or the like. The "ground/- ground plane" may be configured to ground a component of the electronic device. In an embodiment, the "ground/- ground plane" may include any one or more of the following: a grounding plane of a circuit board of the electronic device, a grounding plate formed in a middle frame of the electronic device, a grounding metal layer formed by a metal film under a screen, a conductive grounding plane of a battery, and a conductive member or a metal member electrically connected to the grounding plane/grounding plate/metal layer. In an embodiment, the circuit board may be a printed circuit board (printed circuit board, PCB), for example, an 8-layer, 10-layer, or 12-layer to 14-layer board with 8, 10, 12, 13, or 14 layers of conductive materials, or an element that is separated and electrically insulated by a dielectric layer or an insulation layer, for example, a glass fiber or a polymer. In an embodiment, the circuit board includes a dielectric substrate, a grounding plane, and a trace layer. The trace layer and the grounding plane are electrically connected through a via. In an embodiment, components such as a display, a touchscreen, an input button, a transmitter, a processor, a memory, a battery, a charging circuit, and a system-on-chip (system on chip, SoC) structure may be mounted on or connected to the circuit board, or electrically connected to the trace layer and/or the grounding plane in the circuit board. For example, a radio frequency source is disposed on the trace layer.

Any of the foregoing grounding plane, or grounding plate, or grounding metal layer is made of a conductive material. In an embodiment, the conductive material may be any one of the following materials: copper, aluminum, stainless steel, brass and an alloy thereof, copper foil on an insulation substrate, aluminum foil on the insulation substrate, gold foil on the insulation substrate, silver-plated copper, silver-plated copper foil on the insulation substrate, silver foil on the insulation substrate, tin-plated copper, cloth impregnated with graphite powder, a graphite-coated substrate, a copper-plated substrate, a brass-plated substrate, and an aluminum-plated substrate. A person skilled in the art may understand that the grounding plane/grounding plate/- grounding metal layer may alternatively be made of another conductive material.

Grounding: Grounding means coupling to the ground/ground plane via a grounding structure and/or a grounding circuit. In an embodiment, grounding may be grounding via an entity, for example, grounding via an entity (or referred to as entity grounding) at a specific position on a side frame is implemented via some mechanical members of a middle frame. In an embodiment, grounding may be grounding via a component, for example, grounding via a component (or referred to as component grounding) like a capacitor/inductor/resistor connected in series or in parallel.

Capacitor: A capacitor may be understood as a lumped capacitor and/or a distributed capacitor. The lumped capacitor is a capacitive component, for example, a capacitive element. The distributed capacitor (or a distributed type capacitor) is an equivalent capacitor formed by two conductive members that are spaced apart by a specific spacing.

Inductor: An inductor may be understood as a lumped inductor and/or a distributed inductor. The lumped inductor is an inductive component, for example, a capacitive element. The distributed inductor (or distributed type inductor) is an equivalent inductor formed by using a conductive member of a specific length, for example, an equivalent inductor formed by a conductor through curling or rotation.

Resonance/Resonance frequency: A resonance frequency is also referred to as a resonant frequency. The resonance frequency may have a frequency range, namely, a frequency range in which a resonance occurs. The resonance frequency may be a frequency range in which a return loss is less than -6 dB. A frequency corresponding to a strongest resonance point is a center frequency point frequency. A return loss of the center frequency may be less than -20 dB. It should be understood that unless otherwise specified, in "generating a first resonance" by an antenna/radiator mentioned in this application, the first resonance is a fundamental mode resonance generated by the antenna/radiator, or a resonance with a lowest frequency that is generated by the antenna/radiator in a specific antenna mode. It should be understood that the antenna/radiator may generate one or more antenna modes based on a specific design, and one fundamental mode resonance may be correspondingly generated in each antenna mode.

Resonance frequency band: A range of a resonance frequency is a resonance frequency band, and a return loss of any frequency on the resonance frequency band may be less than -6 dB or -5 dB.

Communication frequency band/Operating frequency band: Regardless of a type of antenna, the antenna constantly operates in a specific frequency range (a frequency bandwidth). For example, an operating frequency band of an antenna supporting a B40 frequency band includes a frequency in a range of 2300 MHz to 2400 MHz. In other words, the operating frequency band of the antenna includes the B40 frequency band. A frequency range that meets a requirement of an indicator may be considered as an operating frequency band of an antenna.

The resonance frequency band and the operating frequency band may be the same or different, or frequency ranges thereof may partially overlap. In an embodiment, one or more resonance frequency bands of an antenna may cover one or more operating frequency bands of the antenna.

Electrical length: An electrical length may be a ratio of a physical length (namely, a mechanical length or a geometric length) to a wavelength of a transmitted electromagnetic wave, and the electrical length may satisfy the following formula:

$$\overline{L} = \frac{L}{\lambda}$$

L is the physical length, and $\lambda$ is the wavelength of the electromagnetic wave.

Wavelength: A wavelength or an operating wavelength may be a wavelength corresponding to a center frequency of a resonance frequency or a center frequency of an operating frequency band supported by an antenna. For example, it is assumed that a center frequency of a B1 uplink frequency band (with a resonance frequency from 1920 MHz to 1980 MHz) is 1955 MHz. In this case, an operating wavelength may be a wavelength obtained through calculation based on the frequency of 1955 MHz. The "operating wavelength" is not limited to the center frequency, and may alternatively be a wavelength corresponding to a non-center frequency of the resonance frequency or the operating frequency band.

It should be understood that the wavelength (operating wavelength) may be understood as a wavelength of an electromagnetic wave in a medium. For example, a wavelength of an electromagnetic wave generated by a radiator and transmitted in a medium and a wavelength transmitted in a vacuum satisfy the following formula:

$$\lambda_\varepsilon = \frac{\lambda_c}{\sqrt{\varepsilon_r}}$$

$\lambda\varepsilon$ is the wavelength of the electromagnetic wave in the medium, $\lambda c$ is the wavelength of the electromagnetic wave in the vacuum, and $\varepsilon r$ is a relative dielectric constant of the medium in a medium layer. The wavelength in embodiments of this application is usually a dielectric wavelength, and may be a dielectric wavelength corresponding to a center frequency of a resonance frequency, or a dielectric wavelength corresponding to a center frequency of an operating frequency band supported by an antenna. For example, it is assumed that a center frequency of a B1 uplink frequency band (with a resonance frequency from 1920 MHz to 1980 MHz) is 1955 MHz. In this case, a wavelength may be a dielectric wavelength obtained through calculation based on the frequency of 1955 MHz. The "dielectric wavelength" is not limited to the center frequency, and may alternatively be a dielectric wavelength corresponding to a non-center frequency of the resonance frequency or the operating frequency band. For ease of understanding, the dielectric wavelength mentioned in embodiments of this application may be simply calculated based on a relative dielectric constant of a dielectric filled in one or more sides of a radiator.

End/Point: An "end/point" in a first end/second end/feeding end/ground end/feeding point/grounding point/connection point of an antenna radiator cannot be understood in a narrow sense as an endpoint or an end part that is physically disconnected from another radiator, and may also be considered as a point or a section on a continuous radiator. In an embodiment, the "end/point" may include a connection/coupling region that is on the antenna radiator and that is coupled and connected to another conductive structure. For example, the feeding end/feeding point may be a coupling region that is on the antenna radiator and that is coupled and connected to a feeding structure (for example, a region opposite to a part of the feeding structure). For another example, the ground end/grounding point may be a connection/coupling region that is on the antenna radiator and that is coupled and connected to the grounding structure.

Open end and closed end: In some embodiments, an open end and a closed end are defined based on whether the open end and the closed end are grounded, for example, the closed end is grounded, and the open end is not grounded. In some embodiments, the open end and the closed end are, for example, relative to another conductor. The closed end is electrically connected to the another conductor, and the open end is not electrically connected to the another conductor. In an embodiment, the open end may also be referred to as a floating end, a free end, an opening end or an open-circuit end. In an embodiment, the closed end may also be referred to as a ground end or a short-circuit end. It should be understood that, in some embodiments, another conductor may be coupled and connected through the open end, to transfer coupling energy (which may be understood as transferring a current).

In some embodiments, the "closed end" may also be understood from a perspective of current distribution. The closed end, the ground end, or the like may be understood as a current strong point on a radiator, or may be understood as an electric field weak point on a radiator. In an embodiment, the closed end is coupled to an electronic component (for example, a capacitor or an inductor), so that a current distribution characteristic of the current strong point/electric field weak point on the radiator can not be changed. In an embodiment, a gap (for example, a gap filled with an insulation material) is disposed at or near the closed end, so that the current distribution characteristic of the current strong point/electric field weak point on the radiator can not be changed.

In some embodiments, the "open end" may also be understood from a perspective of current distribution. The open end, the floating end, or the like may be understood as a current weak point on a radiator, or may be understood as an electric field strong point on a radiator. In an embodiment, the open end is coupled to an electronic component (for example, a capacitor or an inductor), so that a current distribution characteristic of the current weak point/electric field strong point on the radiator can not be changed.

It should be understood that a radiator end (similar to a radiator at an opening of the open end or the floating end from a perspective of a radiator structure) in a gap is coupled to the electronic component (for example, the capacitor or the inductor), so that the radiator end is a current strong point/an electric field weak point. In this case, it should be understood that the radiator end in the gap is actually a closed end, a ground end, or the like.

Codirectional/Reverse current distribution mentioned in embodiments of this application should be understood as that main currents on conductors on a same side are codirectional/reverse in direction. For example, when currents distributed in a same direction are excited on a bent conductor or an annular conductor (for example, a current path is also bent or annular), it should be understood that although main currents excited on conductors on two sides of the annular conductor (for example, on conductors around a gap, or on conductors on two sides of a gap) are in reverse directions, the main currents still meet definition of the currents distributed in a same direction in this application. In an embodiment, that currents on a conductor are in a same direction may mean that the currents on the conductor have no reverse point. In an embodiment, that currents on a conductor are in reverse directions may mean that the currents on the conductor have at least one reverse point. In an embodiment, that currents on two conductors are in a same direction may mean that none of the currents on the two conductors has a reverse point and the currents flow in the same direction. In an embodiment, that currents on two conductors are in reverse directions may mean that none of the currents on the two conductors has a reverse point and the currents flow in the reverse directions. It may be correspondingly understood that directions of currents on a plurality of conductors are codirectional/reverse.

A limitation on a position and a distance, such as middle or a middle position, mentioned in embodiments of this application represents a specific range. For example, a middle (position) of a conductor may be a section of a conductor part including a midpoint on the conductor, for example, the middle (position) of the conductor may be a section of the conductor part whose distance from the midpoint on the conductor is less than a predetermined threshold (for example, 1 mm, 2 mm, or 2.5 mm).

Total efficiency (total efficiency) of an antenna: Total efficiency of an antenna is a ratio of input power to output power at an antenna port.

Radiation efficiency (radiation efficiency) of an antenna: Radiation efficiency of an antenna is a ratio of power radiated by the antenna to space (namely, power that is effectively converted into an electromagnetic wave) to active power input to the antenna. Active power input to the antenna=input power of the antenna-loss power. The loss power mainly includes return loss power and metal ohmic loss power and/or dielectric loss power. The radiation efficiency is a value for measuring a radiation capability of the antenna. Both a metal loss and a dielectric loss are factors that affect the radiation efficiency.

A person skilled in the art may understand that efficiency is usually indicated by a percentage, and there is a corresponding conversion relationship between the efficiency and dB. Efficiency closer to 0 dB indicates better efficiency of the antenna.

Antenna return loss: An antenna return loss may be understood as a ratio of power of a signal reflected back to an antenna port through an antenna circuit to transmit power of the antenna port. A smaller reflected signal indicates a larger signal radiated by an antenna to space and higher radiation efficiency of the antenna. A larger reflected signal indicates a smaller signal radiated by the antenna to space and lower radiation efficiency of the antenna.

The antenna return loss may be represented by an S11 parameter, and S11 is one of S parameters. S11 indicates a reflection coefficient, and the parameter can indicate quality of transmit efficiency of the antenna. The S11 parameter is usually a negative number. A smaller S11 parameter indicates a smaller antenna return loss, less energy reflected back by the antenna, namely, more energy that actually enters the antenna, and higher system efficiency of the antenna. A larger S11 parameter indicates a larger antenna return loss and lower system efficiency of the antenna. It should be noted that an S11 value of -6 dB is usually used as a standard in engineering. When an S11 value of the antenna is less than -6 dB, it may be considered that the antenna can operate normally, or it may be considered that transmit efficiency of the antenna is high.

Diversity technology: A diversity technology is combining independent and irrelevant samples of same signals on different branches using a signal combination technology for output, to reduce adverse impact of channel fading on a receive end. The diversity technology is mainly used to transmit the same signals in different domains. The receive end combines the same signals to effectively improve bit error rate performance. Diversity can be simply described as follows: If a signal on a radio transmission path experiences deep fading, another independent path may still include a strong signal. In this case, two or more signals can be selected from multipath signals. Diversity improves an instantaneous signal-to-noise ratio and an average signal-to-noise ratio at the receive end by 2 dB to 3 dB. This is mainly due to instability, complexity, and time-variance of wireless channels.

MIMO technology: Multiple-Input Multiple-Output, in which a transmit end and a receive end respectively use a plurality of transmit antennas and a plurality of receive antennas, to transmit and receive signals through the plurality of antennas at the transmit end and the plurality of antennas at the receive end, to improve communication quality. The MIMO technology can fully utilize spatial resources, implement multi-transmit and multi-receive through a plurality of antennas, and multiply a system channel capacity without increasing spectrum resources or antenna transmit power, and is considered as a core technology for next-generation mobile communication for its obvious advantages.

Parallelism: Parallelism defined in this application is not limited to absolute parallelism. Definition of the parallelism may be understood as being substantially parallel. Non-absolute parallelism caused by impact of an assembly tolerance, a design tolerance, structural flatness, or other factors is allowed. An error within a small angle range is allowed. For example, an assembly error range within 10 degrees may be understood as a parallelism relationship.

Perpendicular: Perpendicular defined in this application is not limited to absolute perpendicular intersection (a 90-degree included angle). Non-absolute perpendicular intersection caused by impact of an assembly tolerance, a design tolerance, structural flatness, or other factors is allowed. An error within a small angle range is allowed. For example, an assembly error range of 80 degrees to 100 degrees may be understood as a perpendicular relationship.

The terms "first" and "second" are merely intended for a purpose of description, and shall not be understood as an indication or implication of relative importance or an implicit indication of a quantity of indicated technical features. Therefore, a feature limited by "first", "second", or the like may explicitly or implicitly include one or more features.

The following describes possible implementations of this application with reference to the accompanying drawings in the possible implementations of this application.

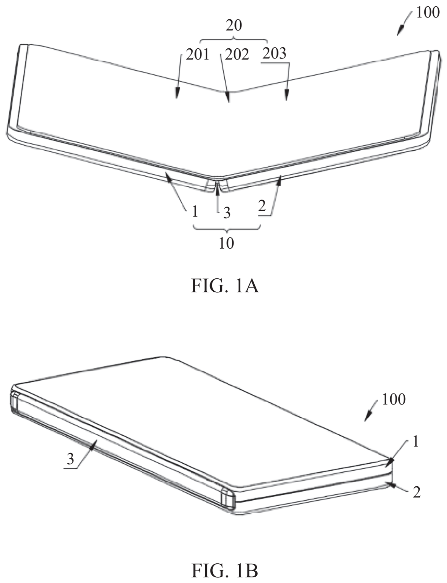

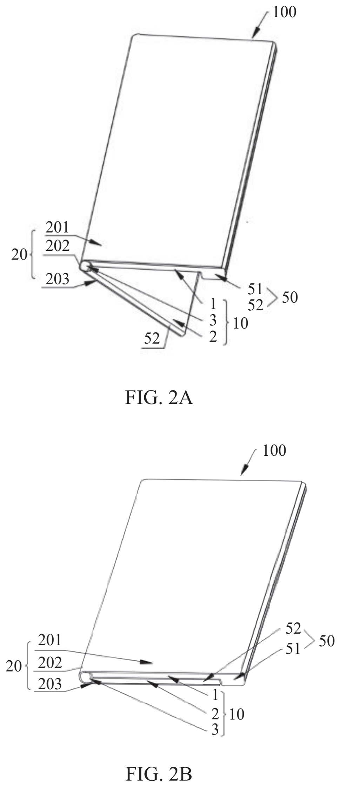

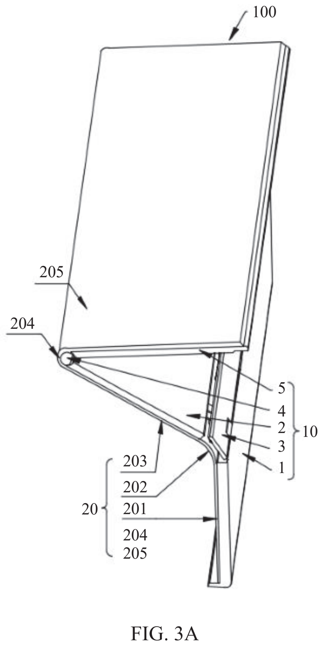

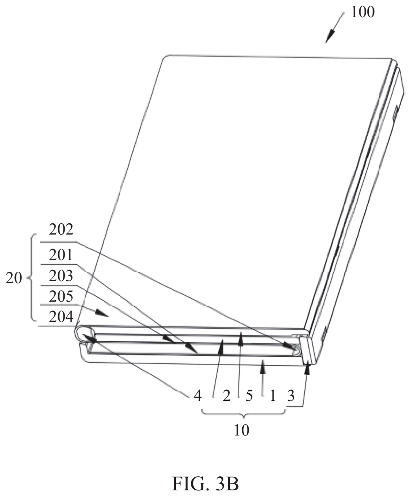

A specific embodiment of this application provides a terminal device. For example, the terminal device is a foldable apparatus. The mobile terminal is usually held by a hand in a use process. In an implementation, the terminal device is a smartphone. The term "foldable apparatus" used in this specification refers to an apparatus that can be folded and unfolded and a terminal device that maintains a folded state or an unfolded state. In an implementation, when the terminal device is in the folded state, a display interface is small, an overall size is small, and the terminal device is easy to carry. When the terminal device is in the unfolded state, the terminal device has a display interface of a large size. The terminal device provided in this specific embodiment of this application may be a folding device (as shown in FIG. 1A, FIG. 1B, FIG. 2A, and FIG. 2B), or may be a triple folding device (as shown in FIG. 3A and FIG. 3B). For example, when the terminal device is the folding device, a flexible display module of the terminal device may be an inward folding architecture (as shown in FIG. 1A and FIG. 1B), or may be an outward folding architecture (as shown in FIG. 2A and FIG. 2B).

FIG. 1A is a diagram of a terminal device at a position in a process of transitioning from an unfolded state to a folded state according to an implementation. FIG. 1B is a diagram of the terminal device shown in FIG. 1A in the folded state. Refer to FIG. 1A and FIG. 1B. In an implementation, the terminal device 100 is a folding device in an inward folding solution, and the terminal device 100 includes a device body 10 and a flexible display module 20. The flexible display module 20 is assembled on a surface of the device body 10. The device body 10 includes a first body 1, a second body 2, and a hinge 3. The hinge 3 is located between the first body 1 and the second body 2, so that the first body 1 and the second body 2 can be folded or unfolded relative to each other. The flexible display module 20 includes a first part 201, a second part 203, and a bent part 202 connecting the first part 201 and the second part 203. The first part 201 is connected to the first body 1, and the second part 203 is connected to the second body 2. In a process in which the first body 1 and the second body 2 are folded relative to each other, the flexible display module 20 is located on an inner side of a folding direction. In the process in which the first body 1 and the second body 2 are folded relative to each other, the first part 201 and the second part 203 are folded relative to each other, and the bent part 202 is bent and deformed. In the folded state, the flexible display module 20 is disposed between the first body 1 and the second body 2, and the first part 201 and the second part 203 are stacked. In the figure shown in FIG. 1B, the flexible display module 20 is blocked by the device body 10 and is invisible.

FIG. 2A is a diagram of a terminal device at a position in a process of transitioning from an unfolded state to a folded state according to an implementation. FIG. 2B is a diagram of the terminal device shown in FIG. 2A in the folded state. Refer to FIG. 2A and FIG. 2B. In an implementation, the terminal device 100 is a folding device in an outward folding solution. In a process in which a first body 1 and a second body 2 of a device body 10 are folded relative to each other around a hinge 3, a flexible display module 20 is located on an outer side of a folding direction, the first body 1 and the second body 2 are close to each other, so that the first body 1 and the second body 2 are stacked in the folded state. In the folded state, the flexible display module 20 covers a periphery of the device body 10.

FIG. 3A is a diagram of a terminal device at a position in a process of transitioning from an unfolded state to a folded state according to an implementation. FIG. 3B is a diagram of the terminal device shown in FIG. 3A in the folded state. Refer to FIG. 3A and FIG. 3B. In an implementation, the terminal device 100 is a triple folding device. The device body 10 includes a first body 1, a second body 2, a hinge 3, a hinge 4, and a third body 5. The hinge 3 is connected between the first body 1 and the second body 2, and the hinge 4 is connected between the third body 5 and the second body 2. A flexible display module 20 includes a first part 201, a bent part 202, a second part 203, a bent part 204, and a third part 205. The bent part 202 is connected between the first part 201 and the second part 203, and the bent part 204 is connected between the third part 205 and the second part 203. The first part 201 is connected to the first body 1, the second part 203 is connected to the second body 2, and the third part 205 is connected to the third body 5. In a process in which the first body 1 and the second body 2 are folded relative to each other, the first part 201 and the second part 203 are equivalent to an outward folding solution, that is, the first part 201 and the second part 203 are located on an outer side of a folding direction. In a process in which the second body 2 and the third body 5 are folded relative to each other, the second part 203 and the third part 205 are equivalent to an inward folding solution, that is, the second part 203 and the third part 205 are located on an inner side of a folding direction. In the folded state, both the device body 10 and the flexible display module 20 are folded into a triple folding architecture, and the first body 1, the second body 2, and the third body 5 are stacked. In the folded state, the first part 201 is located on an outer surface of the device body 10, and is configured to display an interface. The second part 203 and the third part 205 are sandwiched and hidden between the second body 2 and the third body 5.

The implementation shown in FIG. 3A and FIG. 3B is an S-shaped triple folding device. The S-shaped triple folding device may be understood as that in the folded state, the second body 2 is stacked between the first body 1 and the third body 5. In another implementation, the terminal device may alternatively be a G-shaped triple folding device. The G-shaped triple folding device may be understood as that the first body and the second body may be folded into a large U-shaped structure, and the third body is folded (or stacked) between the first body and the second body.

An antenna system is disposed in the terminal device, to implement sending and receiving of a communication signal. The antenna system may use a multi-antenna technology. In an implementation, the antenna system may use a main diversity technology. For example, when being used in a mobile phone, the antenna system may be an application scenario of multi-receive and multi-transmit (namely, multi-channel receiving and multi-channel transmitting); or when being used in a base station, the antenna system may be an application scenario of single-receive and single-transmit (namely, single-channel transmitting and single-channel receiving) or an application scenario of multi-receive and multi-transmit.

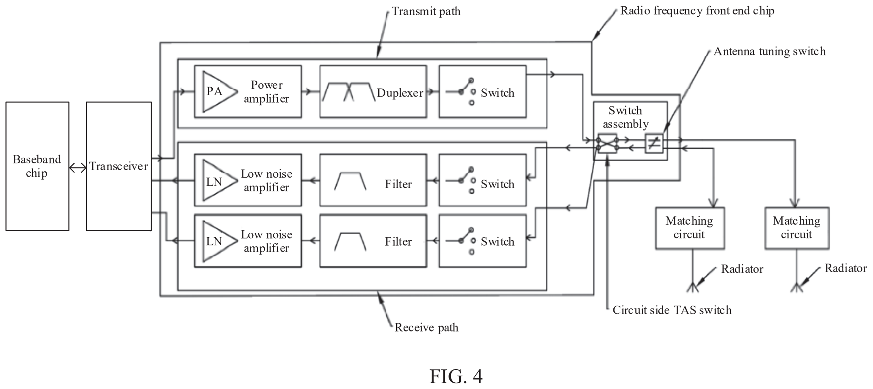

FIG. 4 is a diagram of a hardware architecture of an antenna system in a terminal device according to an implementation of this application. In an implementation, the antenna system includes a baseband chip, a transceiver (also referred to as a radio frequency transceiver unit), a radio frequency front end chip, a matching circuit, and a radiator. In an embodiment, the antenna system may further include a radio frequency socket, and the radio frequency socket is disposed between the radio frequency front end chip and the matching circuit. The radio frequency socket may also be referred to as a radio frequency test socket. In the implementation shown in FIG. 4, there are two radiators. It may be understood that the antenna system provided in this solution may use a diversity technology. One radiator is a radiator of a main antenna, and the other radiator is a radiator of a diversity antenna. Each radiator is connected to one matching circuit. The matching circuit may be configured to implement impedance matching of signals received and sent by the radiator. The matching circuit may also be configured to match a resonance frequency band of a radio frequency signal.

The radio frequency front end chip includes a transmit path, a receive path, and a switch assembly. It should be understood that the figure shows only an architecture of the radio frequency front end chip in an implementation. In another implementation, the radio frequency front end chip may have another architecture. In the implementation shown in FIG. 4, the transmit path includes a power amplifier, a duplexer, and a switch, and the receive path includes a low noise amplifier, a filter, and a switch. In an implementation, the switch assembly includes a circuit side TAS (Transmit Antenna Selection, transmit antenna selection) switch, an antenna tuning switch, and the like. In an implementation, the matching circuit may further include one or more of a circuit with a tuning function, a circuit with a filtering function, and a switching circuit.

In FIG. 4, a direction of an arrow on a signal transmission line represents a direction of a signal flow. Signal interaction between the baseband chip and the transceiver is bidirectional. The transceiver may receive a communication signal from the baseband chip and send the communication signal to the transmit path. The communication signal sequentially passes through the power amplifier, the duplexer, and the switch in the transmit path. After flowing out of the transmit path, the communication signal is transmitted to a position of the radio frequency socket through the switch assembly. The radio frequency socket is electrically connected to the matching circuit, and signal interaction between the radio frequency socket and the matching circuit is bidirectional. The communication signal is transmitted to the radiator after passing through the matching circuit. The communication signal received by the radiator may be transmitted to the radio frequency socket after passing through the matching circuit, and then transmitted to the radio frequency front end chip from the position of the radio frequency socket. The communication signal enters the receive path after passing through the switch assembly. The communication signal sequentially passes through the switch, the filter, and the low noise amplifier in the receive path. After receiving the communication signal, the transceiver transmits the communication signal to the baseband chip.

In an implementation, the radio frequency front end chip has a plurality of independent radio frequency paths, for example, one transmit path and two receive paths. In another implementation, the radio frequency front end chip may include one or more transmit paths and one or more receive paths, and the like.

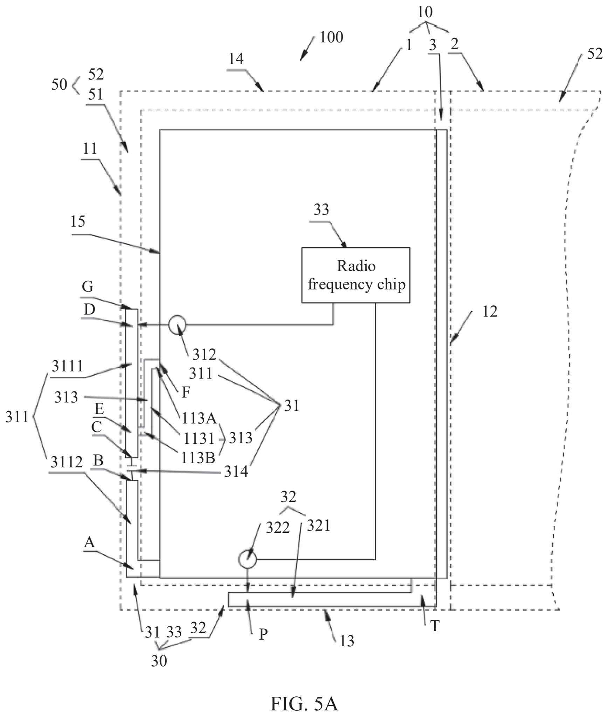

FIG. 5A is a diagram of a plane of an antenna system in a terminal device according to an implementation of this application. Refer to FIG. 5A. The terminal device 100 provided in an embodiment of this application includes a device body 10 and an antenna system 30. The antenna system 30 is disposed in the device body 10. The device body may be the device body shown in any one of the implementations in FIG. 1A, FIG. 1B, FIG. 2A, FIG. 2B, FIG. 3A, and FIG. 3B.

Refer to FIG. 5A. The device body 10 includes a first body 1, a second body 2, and a hinge 3. The first body 1 and the second body 2 are connected via the hinge 3, so that the first body 1 and the second body 2 can be folded or unfolded relative to each other. In FIG. 5A, a dashed-line frame represents the first body 1, a part of the second body 2, and the hinge 3, and an outer frame structure formed by two dashed lines represents a corresponding side edge position of a middle frame of the terminal device 100. The first body 1 includes a first side edge 11, a second side edge 12, a third side edge 13, and a fourth side edge 14. The first side edge 11 and the second side edge 12 are disposed opposite to each other, the third side edge 13 and the fourth side edge 14 are disposed opposite to each other, the third side edge 13 is connected between the first side edge 11 and the second side edge 12, and the second side edge 12 is configured to dispose the hinge 3. When the terminal device 100 is in a folded state, the first side edge 11 and the second side edge 12 are parts held by a hand when the terminal device is handheld, and especially, middle parts of the first side edge 11 and the second side edge 12 and regions that are of the middle parts and near the bottom are often held. In a specific implementation, the third side edge 13 is an edge at a bottom end of the terminal device 100, and the fourth side edge 14 is an edge at a top end of the terminal device 100. The hinge 3 is located at the second side edge 12, and therefore it is inconvenient to dispose an antenna at a position of the second side edge 12. Radiators in the antenna system 30 provided in this application may be distributed on the first side edge 11, the third side edge 13, and the fourth side edge 14.

In an implementation, the terminal device 100 provided in this application is a smartphone. In an implementation, when the terminal device 100 is in the folded state, the first side edge 11 is a long edge, and the third side edge 13 is a short edge, for example, a size range of the first side edge 11 is less than or equal to 170 mm, and a size range of the third side edge 13 is less than or equal to 80 mm.

Refer to FIG. 5A. In an implementation, the terminal device 100 includes the middle frame 50, a part that is of the middle frame and that corresponds to the first side edge 11 is a first frame part 51, and a part that is of the middle frame and that corresponds to the second body 2 is a second frame part 52. In the implementation shown in FIG. 5A, a dashed-line frame represents the middle frame 50, and the first side edge 11, the second side edge 12, the third side edge 13, and the fourth side edge 14 in the first body 1 are represented by dashed lines of outer edges of the dashed-line frame.

In an implementation, in a thickness direction of the terminal device 100, a size of the first frame part 51 is greater than a size of the second frame part 52.

In an embodiment, as shown in FIG. 2A and FIG. 2B, the terminal device 100 is a foldable apparatus, and a side edge (namely, the first frame part 51 corresponding to the first side edge 11) that is of the first body 1 and that is away from the second body 2 is a middle frame region with a larger size in a thickness direction. A radiator in the antenna system 30 is disposed in the first frame part 51. When the terminal device 100 is in the folded state, in the thickness direction, a side edge of the second body 2 and the first frame part 51 are not stacked, and the side edge of the second body 2 is retracted relative to the first frame part 51, so that the first frame part 51 is not blocked on both sides in the thickness direction. The radiator in the antenna system 30 is disposed at a position of the first frame part 51, which helps improve radiation performance of the antenna system, and also has sufficient space to facilitate a layout of the radiator in the antenna system.

Refer to FIG. 5A. In an implementation, the antenna system 30 includes a first antenna 31 configured to generate a first resonance, a second antenna 32 configured to generate a second resonance, and a radio frequency chip 33. The first antenna 31, the second antenna 32, and the radio frequency chip 33 are all disposed in the first body 1. The radio frequency chip 33 is electrically connected to the first antenna 31 and the second antenna 32. In this implementation, the radio frequency chip 33, the first antenna 31, and the second antenna 32 are disposed in the first body 1, so that a signal transmission path between the radio frequency chip 33 and a controller (for example, an SOC (system on a chip)) in the terminal device 100 does not need to cross or pass through the hinge 3, and a transmission line between the radio frequency chip 33 and the first antenna 31 and a transmission line between the radio frequency chip 33 and the second antenna 32 do not need to cross or pass through the hinge. This helps reduce a loss on the radio frequency signal transmission path and improve radio frequency receiving and sending performance of the antenna system 30.

In an implementation, a frequency band of the first resonance includes at least one communication frequency band in a frequency range from 698 MHz to 960 MHz. In an implementation, a frequency band of the second resonance includes at least one communication frequency band in the frequency range from 698 MHz to 960 MHz. In an implementation, one of the first antenna 31 and the second antenna 32 is a main antenna, and the other of the first antenna 31 and the second antenna 32 is a diversity antenna. In an implementation, the antenna system includes a circuit side TAS switch. The circuit side TAS switch is configured to switch between the first antenna 31 and the second antenna 32, so that the first antenna 31 can be the main antenna or the diversity antenna, and the second antenna 32 can be the diversity antenna or the main antenna.

In an implementation, the first antenna 31 is a low-frequency main antenna. The first antenna 31 as the low-frequency main antenna is an antenna that can receive and transmit electromagnetic waves of at least one communication frequency band in the frequency range from 698 MHz to 960 MHz. In an implementation, the second antenna 32 is a low-frequency diversity antenna. The second antenna 32 as the low-frequency diversity antenna is an antenna that can receive (but cannot transmit) electromagnetic waves of at least one communication frequency band in the frequency range from 698 MHz to 960 MHz. A low-frequency antenna (supporting a low frequency band of a cellular communication frequency band) is characterized by a large size, and needs to occupy large space. Therefore, how to appropriately arrange a specific position of a radiator in the low-frequency antenna in the terminal device 100 to obtain a low ECC becomes a difficult technical problem to overcome. An ECC represents correlation between amplitudes of received signals between different antenna units, and is a parameter indicator for measuring diversity performance and coupling performance of a MIMO multi-antenna system.

Refer to FIG. 5A. In an implementation, the first antenna 31 includes a first radiator 311, a first feeding structure 312, an inductive structure 313, and a capacitive structure 314, and at least a part of the first radiator 311 is distributed on the first side edge 11. The second antenna 32 includes a second radiator 321 and a second feeding structure 322, and at least a part of the second radiator 321 is distributed on the third side edge 13. In this solution, at least the part of the first radiator 311 is disposed on the first side edge 11, and at least the part of the second radiator 321 is disposed on the third side edge 13, so that directions of currents excited by the first antenna 31 and the second antenna 32 can be orthogonal, and modes excited by the first antenna 31 and the second antenna 32 are a longitudinal mode and a transverse mode that are orthogonal. Specifically, the first antenna 31 can excite the longitudinal mode on the first side edge 11, and the second antenna 32 can excite the transverse mode on the third side edge 13. The two modes are orthogonal, to obtain a low ECC.

Refer to FIG. 5A. The first radiator 311 includes a first stub 3111 and a second stub 3112. The first stub 3111 and at least a part of the second stub 3112 are distributed at a spacing in different regions of the first side edge 11. At least the part of the second stub 3112 is located on a side that is of the first stub 3111 and that is adjacent to the third side edge 13. The first stub 3111 includes an open end G, a first feeding point D, a first position E, and a first end part C that are sequentially arranged in an extension direction of the first side edge 11. An end that is of the first stub 3111 and that is away from the second stub 3112 is the open end G. The first feeding point D is electrically connected to the first feeding structure 312, the inductive structure 313 is electrically connected between the first position E and a ground plane, the second stub 3112 includes a second end part B and a grounding point A, the grounding point A and the second end part B are spaced apart, and the second end part B and the first end part C are coupled via the capacitive structure 314.

In an implementation, the first radiator 311 has only one open end, and the open end G is located in a middle part region of the first side edge 11.

In the implementation shown in FIG. 5A, the inductive structure 313 and the capacitive structure 314 are disposed in the first antenna 31, and the capacitive structure 314 enables the first stub 3111 and the second stub 3112 to be spaced and strongly coupled, the capacitive structure 314 may be used to increase an aperture of the first antenna 31, and a position of the open end G of the first stub 3111 may approach a middle position of the first side edge. In this way, a longitudinal (in the extension direction of the first side edge) component of the first antenna 31 can be increased, that is, the longitudinal mode is more obvious. The inductive structure 313 can implement reduction of electric field strength at the position of the open end G of the first stub 3111. The electric field strength at the open end G of the first stub 3111 is reduced, to improve performance of the first antenna 31, specifically, help reduce impact of a hand phantom, and improve hand phantom performance of the first antenna 31. This solution facilitates achieving a lower ECC by incorporating both the inductive structure 313 and the capacitive structure 314.

In the implementation shown in FIG. 5A, both the first stub 3111 and the second stub 3112 are of a straight strip structure, extension directions of the first stub 3111 and the second stub 3112 are both the extension direction of the first side edge 11, the terminal device 100 is in a rectangular shape in the folded state, the first side edge 11 is the long edge of the terminal device 100, and the third side edge 13 is the short edge. In an implementation, the first stub 3111 may be collinear with the second stub 3112. In another implementation, the first stub 3111 and the second stub 3112 may be parallel to each other, may not be collinear, that is, are staggered, provided that a spacing between the first stub 3111 and the second stub 3112 can implement that a current of the first stub 3111 is coupled to the second stub 3112. The open end G of the first stub 3111 is the end that is of the first stub 3111 and that is away from the second stub 3112. A bottom end of the first stub 3111 is the first end part C of the first stub 3111. A top end of the second stub 3112 is the second end part B of the second stub 3112. The second end part B is adjacent to the first end part C of the first stub 3111. A bottom end of the second stub 3112 is the grounding point A of the second stub 3112. In another implementation, the grounding point A of the second stub 3112 may not be disposed at the bottom end of the second stub 3112, and the grounding point A of the second stub 3112 may be located at a position close to a bottom (namely, the third side edge 13).

In an implementation, the open end G of the first stub 3111 is located at a midpoint of the first side edge 11 or a position close to the midpoint. In an implementation, the open end G of the first stub 3111 may be located above the midpoint of the first side edge 11, namely, a position between the midpoint and the fourth side edge 14. In an implementation, the open end G of the first stub 3111 may alternatively be located below the midpoint of the first side edge 11, namely, a position between the midpoint and the third side edge 13. In an implementation, a position of the open end G of the first stub 3111 is a region that is easily held by a hand in a use process of the terminal device 100. The grounding point A of the second stub 3112 may be at a position that is on the first side edge 11 and that is adjacent to the third side edge 13.

Refer to FIG. 5A. In an implementation, the capacitive structure 314 between the first end part C and the second end part B is spacing space between the first stub 3111 and the second stub 3112, that is, an equivalent capacitor structure is formed by forming a spacing between the first end part C and the second end part B. Specifically, the spacing space may be filled with an insulation medium. For example, the first stub 3111 and the second stub 3112 are directly formed on the middle frame of the terminal device by using a gap, and the insulation medium is filled in a position of the gap, to implement the capacitive structure 314 formed between the first end part C and the second end part B. Sizes of the first stub 3111 and the second stub 3112 in a width direction and a vertical distance between the first end part C and the second end part B in a direction along which the first side edge 11 extends determine a capacitance value of the capacitive structure 314. In an implementation, a spacing distance between the first stub 3111 and the second stub 3112 is less than or equal to 2 mm. The spacing distance is limited, to help provide an appropriate coupling amount, meet a requirement of adapting to a form of an outer surface of the middle frame of the terminal device (avoid poor appearance form integrity caused by a large spacing), and ensure structural strength. In an implementation, a range of an equivalent capacitance value of the capacitive structure 314 is greater than or equal to 0.5 pF and less than or equal to 3 pF. The capacitive structure 314 is disposed to adjust electric fields at two ends (the open end G and the first end C) of the first stub 3111. The electric fields are adjusted to improve impact of the hand model and improve hand model efficiency of the first antenna.

The first antenna and the second antenna in the antenna system provided in this application are side frame antennas, that is, the antennas are disposed in a side frame region of the terminal device. In an implementation, the first stub 3111 and the second stub 3112 of the first radiator 311, and the second radiator 321 are manufactured on the middle frame 50 of the terminal device 100. The middle frame 50 is made of a metal material. In a process of manufacturing the middle frame 50, a metal side frame is directly milled on the middle frame 50, to form the first stub 3111, the second stub 3112, and the second radiator 321. In an implementation, the side frame may be made of a non-conductive material, and the first stub 3111 and the second stub 3112 of the first radiator 311, and the second radiator 321 may also be bar-shaped conductive structures, and are fastened to an inner surface of the side frame of the terminal device or at least partially embedded into the middle frame 50, for example, fastened to the inner side surface of the middle frame 50 by using adhesive.

In the implementation shown in FIG. 5A, all components of the first radiator 311 are distributed in a middle region and a bottom region of the first side edge 11, and a top region of the first side edge 11 may be used to arrange a button of the terminal device or arrange another antenna. All components of the second radiator 321 are distributed in the third side edge 13. In this solution, the first radiator 311 and the second radiator 321 are respectively disposed on the first side edge 11 and the third side edge 13 that are adjacent to each other, so that directions of currents excited by the first antenna 31 and the second antenna 32 can be orthogonal, and modes excited by the first antenna 31 and the second antenna 32 are a longitudinal mode and a transverse mode that are orthogonal. Specifically, the first antenna 31 excites the longitudinal mode on the first side edge 11, and the second antenna 32 excites the transverse mode on the third side edge 13. The two modes are orthogonal, to obtain a low ECC. Specifically, an ECC between the first antenna 31 and the second antenna 32 may be 0.28.

In an implementation, the ground plane 15 is disposed in the terminal device 100, and both the first radiator 311 and the second radiator 321 have a grounding point electrically connected to the ground plane 15. The ground plane 15 may be understood as at least a part of any grounding plane, or grounding plate, or grounding metal layer of the terminal device 100, or at least a part of any combination of any grounding plane, grounding plate, grounding part, or the like. The ground plane may be used as a grounding part of a component in the terminal device 100. In an embodiment, the ground plane 15 may be a grounding layer of a circuit board of the terminal device, or may be a grounding plate formed by a metal housing of the terminal device 100 or a grounding metal layer formed by a metal thin film under a screen. Any of the foregoing grounding plane, or grounding plate, or grounding metal layer is made of a conductive material. For example, the conductive material may be but is not limited to the following materials: copper, aluminum, stainless steel, brass and an alloy thereof, copper foil on an insulation substrate, aluminum foil on the insulation substrate, gold foil on the insulation substrate, silver-plated copper, silver-plated copper foil on the insulation substrate, silver foil on the insulation substrate, tin-plated copper, cloth impregnated with graphite powder, a graphite-coated substrate, a copper-plated substrate, a brass-plated substrate, and an aluminum-plated substrate.

In the implementation shown in FIG. 5A, the ground plane 15 may be a grounding layer of the circuit board in the terminal device, a middle plate of the middle frame, or a grounding part of another component, for example, a ground part of a battery pack. Specifically, the middle frame of the terminal device includes a support plate (or the middle plate) and the side frame. The side frame is connected to an edge of the support plate and surrounds the support plate. The support plate may be configured to mount components such as the circuit board, a battery, and a heat dissipation structure.

Refer to FIG. 5A. In an implementation, the first feeding structure 312 and the second feeding structure 322 are electrically connected to the radio frequency chip 33. In an implementation, the radio frequency chip 33 may include the radio frequency front end chip, the transceiver, and the baseband chip in FIG. 4. In this embodiment of this application, the radio frequency chip 33 transmits an electrical signal to the first feeding structure 312 and the second feeding structure 322, and the first feeding structure 312 and the second feeding structure 322 excite the first radiator 311 and the second radiator 321 to generate currents, to form resonance modes of the first antenna and the second antenna.

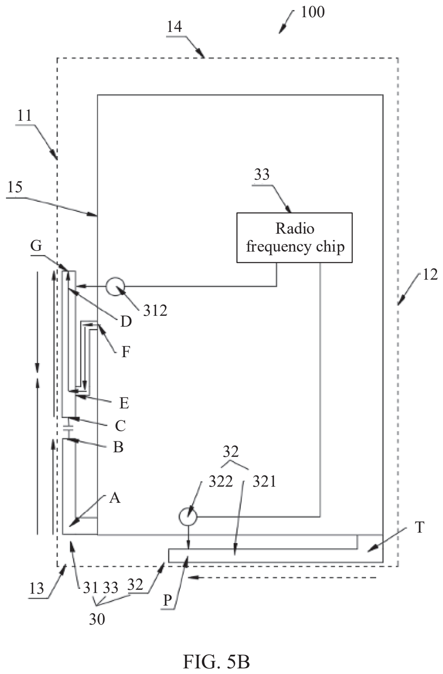

FIG. 5B is a diagram of current distribution of each resonance mode of the first antenna in the implementation shown in FIG. 5A. Refer to FIG. 5B. When the first feeding structure 312 feeds the first radiator 311, the first radiator 311 mainly generates currents in two modes, which are a quarter mode current and a three-quarter mode current. In the quarter mode, the first radiator 311 is in a fundamental mode. For example, in one case, a direction of a current of the first antenna 31 in the quarter mode is that the current flows from the grounding point A of the second stub 3112 to the first feeding point D of the first stub 3111. In another case, a direction of a current of the first antenna 31 in the quarter mode is that the current flows from the first feeding point D of the first stub 3111 to the grounding point A of the second stub 3112. In the quarter mode, the current on the first radiator 311 is distributed as a same-direction current, and the current passes through the first radiator 311 in a positive sequence or a reverse sequence of the grounding point A, the second end B, the first end C, the first position E, the first feeding point D, and the top part G. There is no reverse current. In the three-quarter mode, the first radiator 311 is located in a higher-order mode, and the current on the first radiator 311 has a reverse point. The current reverse point corresponds to a strong electric field point on the first stub 3111. For example, in one case, in the three-quarter mode, a current in one direction (downward) flows from the first feeding point D of the first stub 3111 to the first position E (referred to as a reverse point) adjacent to the first stub 3111, and a current in another direction (upward) flows from the grounding point A of the second stub 3112 to the second end part B of the second stub 3112, then enters the first end part C of the first stub 3111, flows through the first position E, and flows to a position of the reverse point. In the three-quarter mode of the first antenna 31, a current reverse position may also be located at the position of the gap between the first stub 3111 and the second stub 3112, that is, a current on the first stub 3111 and a current on the second stub 3112 are reverse.

Refer to FIG. 5B. When the first feeding structure 312 feeds the first radiator 311, the inductive structure 313 is connected between the first stub 3111 and the ground plane 15, to implement inductive loading between the first stub 3111 and the ground plane 15. The inductive structure 313 is excited to generate a quarter mode resonance (also referred to as a C (Common mode) mode resonance). For example, a direction of a current in this mode may be flowing from a position of an inductive structure F at which the inductive structure 313 is connected to the ground plane 15 to the first location E at which the inductive structure 313 is connected to the first stub 3111, and then flowing from the first position E to the first feeding point D of the first stub 3111.

In an implementation, a part that is of the first stub and that is from the first feeding point D to the first position E and the inductive structure 313 are configured to jointly generate a third resonance. In an implementation, a frequency difference between the third resonance and the first resonance is f', and the first resonance is f1, where 35%≤f'/f1≤60%. In an implementation, a frequency band of the first resonance includes at least one communication frequency band in a frequency range from 698 MHz to 960 MHz, and the frequency difference between the third resonance and the first resonance is in a range from 300 MHz to 500 MHz. In an implementation, a sum of an electrical length from the first feeding point D to the first position E on the first stub 3111 and an electrical length of the inductive structure 313 is a quarter of a wavelength corresponding to a resonance frequency of the third resonance of the first antenna 31.

In an implementation, because the capacitive structure 314 is disposed in the first antenna to increase the aperture of the first antenna 31, the three-quarter mode and the quarter mode generated by the first radiator are close. An efficiency dip between the three-quarter mode and the quarter mode generated by the first radiator may fall in a target frequency band. When a user holds the electronic device (or referred to as the hand model), a resonance frequency of the three-quarter mode is further lower, and in-band efficiency (for example, efficiency of the antenna system) of the target frequency band (for example, the at least one communication frequency band in the low frequency from 698 MHz to 960 MHz) is reduced. In this solution, the inductive structure 313 is introduced into the first antenna 31 to increase the resonance frequency of the three-quarter mode (or have a high loading function on the three-quarter mode), and reduce the efficiency dip between the three-quarter mode and the quarter mode, or pull the efficiency dip between the three-quarter mode and the quarter mode out of the target frequency band, thereby improving the in-band efficiency of the first antenna.

In an implementation, when a frequency of the first resonance is 960 MHz, a range of a frequency of a three-quarter mode excited by the antenna is between 135% of the frequency of the first resonance and 160% of the frequency of the first resonance.

In an implementation, the inductive structure 313 is introduced, so that an additional quarter mode resonance mode is formed from the first feeding point D to the ground via the inductive structure 313. It may also be understood as that the inductive structure 313 is excited to generate the C mode. For a conventional quarter mode and a conventional three-quarter mode, the open end G of the first stub 3111 of the first radiator 311 is a strong electric field region. When a user holds the electronic device, for example, when the head and/or the hand of the user are/is close to or even block the open end G of the first stub 3111, the first antenna 31 is affected by the user, and antenna performance deteriorates, for example, system efficiency of the antenna decreases. Therefore, the electric field strength at the open end G of the first stub 3111 can be reduced, to improve performance of the first antenna 31. In this application, the inductive structure 313 is electrically connected between the first stub 3111 and the ground plane 15 to form the quarter mode resonance mode, so that electric field strength at the position of the first feeding point D and electric field strength at the position of the open end G can be reduced, thereby helping reduce impact of the user holding the electronic device (or referred to as the hand model) and improve hand model performance of the first antenna 31. In an implementation, the inductive structure 313 is disposed, so that right-hand model performance of the first antenna 31 is improved by 1.7 dB, and left-hand model performance of the first antenna 31 is improved by 0.5 dB.

In an implementation, a frequency band of the first resonance includes at least one communication frequency band in a frequency range from 698 MHz to 960 MHz, and a range of a length CG of the first stub 3111 in the first antenna 31 is between a quarter of a wavelength corresponding to a resonance frequency of the first resonance and half of the wavelength corresponding to the resonance frequency of the first resonance. In an implementation, a range of a length AB of the second stub 3112 is between one sixth of the wavelength corresponding to the resonance frequency of the first resonance of the first antenna 31 and one fourth of the wavelength corresponding to the resonance frequency of the first resonance.

In an implementation, a range of a ratio of the length CG of the first stub 3111 to the length AB of the second stub 3112 is that AB/CG is greater than or equal to 1/3 and less than or equal to 1.

In this embodiment of this application, an electrical length of the first stub 3111 and an electrical length of the second stub 3112 are limited, to help adjust electric fields at two positions of the open end G and the first end part C of the first stub 3111.

In this embodiment of this application, the range of the length ratio of the first stub 3111 to the second stub 3112 is limited, which is equivalent to limiting a position at which the capacitive structure 314 is disposed on the first radiator 311. This helps effectively increase the aperture of the first antenna 31, specifically, increase the aperture of the first radiator 311 in generating the first resonance (the quarter mode), and improve radiation efficiency of the first radiator 311 and system efficiency of the first antenna 31. Because the aperture of the first radiator 311 in generating the first resonance (the quarter mode) is effectively increased, the three-quarter mode and the quarter mode generated by the first radiator 311 are closer than those when no capacitive structure 314 is disposed.

In an implementation, the physical length CG of the first stub 3111 is 50 mm, and the physical length AB of the second stub 3112 is 24.5 mm.

In an implementation, the physical length CG of the first stub 3111 is 50 mm, and the physical length AB of the second stub 3112 is 33.2 mm.

Refer to FIG. 5A. In an implementation, all parts of the second radiator 321 are located on the third side edge 13. One end of the second radiator 321 includes a second feeding point P, the other end of the second radiator 321 includes a grounding point T, the grounding point T is electrically connected to the ground plane 15, and an extension direction of the second radiator 321 is perpendicular to the extension direction of the first side edge 11. The grounding point T of the second radiator 321 is adjacent to the second side edge 12, and the second feeding point P of the second radiator 321 is located between the first side edge 11 and the second side edge 12; or the second feeding point P of the second radiator 321 is adjacent to a midpoint of the third side edge 13 relative to the grounding point T, and the grounding point T of the second radiator 321 is adjacent to the second side edge 12 relative to the second feeding point P.

Refer to FIG. 5B. When the second feeding structure 322 feeds power to the second feeding point P, the second radiator 321 is excited to generate a current. For example, in a case, a direction of the current on the second radiator 321 is along an extension direction of the third side edge 13, and the current flows from the grounding point T to the second feeding point P.

In an implementation, an electrical length of the second radiator 321 is a quarter of a wavelength corresponding to a resonance frequency of a second resonance of the second antenna 32.

In an implementation, a range of a length ratio of the first radiator 311 to the second radiator 321 is between 5/3 and 3.

Refer to FIG. 5A. In an implementation, the inductive structure 313 is formed by a strap or strip stub.

The inductive structure 313 includes a first connection segment 113A, a second connection segment 113B, and a main stub 1131 connected between the first connection segment 113A and the second connection segment 113B, the first connection segment 113A is connected between one end of the main stub 1131 and the ground plane 15, and the second connection segment 113B is connected between the other end of the main stub 1131 and the first position E of the first stub 3111. In an implementation, the main stub 1131 is designed as a metal strap or strip structure, and the main stub 1131 may be disposed in a spacing between a side frame and a main board of the terminal device 100, to help save space inside the terminal device 100. Connection between the main stub 1131 and the ground plane 15 may be implemented by welding the second connection segment 113B and by connecting a conductive adhesive. Connection between the main stub 1131 and the first stub 3111 may be implemented by welding the first connection segment 113A and by connecting a conductive adhesive. This facilitates assembly operations. The inductive structure 313 is a strap or strip conductive stub structure, and an inductive component does not need to be disposed, because the inductive component needs to be disposed on a circuit board. In this solution, no circuit board needs to be disposed near the first radiator 311, so that space near the first radiator 311 can be saved, and the saved space can be used to dispose another component like a battery.

In an implementation, the inductive structure 313 and the first stub 3111 may be further integrally formed. For example, the first connection segment 113A, the second connection segment 113B, and the main stub 1131 are of a structure directly milled on the middle frame by using a CNC (computer numerical control, which is a computer numerical control machine tool (Computer Numerical Control) and is an automated machine tool controlled by a program). In an implementation, the first connection segment 113A, the second connection segment 113B, and the main stub 1131 of the inductive structure 313, and the first stub 3111 and the second stub 3112 are all parts of the middle frame. In an implementation, the inductive structure 313 may be electrically connected to the ground plane 15 of the terminal device 100. For example, the inductive structure 313 is electrically connected to the middle plate, the middle plate is a part of the ground plane, and the middle plate is a grounding metal part in the terminal device. For example, the middle plate may be a grounding layer of a circuit board, a metal housing, another component, a grounding part of a battery pack, or the like.

Refer to FIG. 5A and FIG. 5B. In an implementation, in an extension direction of the first stub 3111, the first connection segment 113A is located between the second connection segment 113B and the first feeding point D. In this implementation, a direction of a current from the first feeding point D to the first position E on the first stub 3111 is opposite to a direction of a current on the main stub 1131 of the inductive structure 313.

Refer to FIG. 5A and FIG. 5B. In an implementation, a frequency band of the first resonance includes at least one communication frequency band in a frequency range from 698 MHz to 960 MHz, and a distance between the second connection segment 113B and the first end part C is less than or equal to one-sixteenth of a wavelength corresponding to a resonance frequency of the first resonance of the first antenna 31. In this solution, an upper limit of the distance between the second connection segment 113B and the first end part C is limited, to help improve hand model performance of the first antenna 31.

In an implementation, the distance between the second connection segment 113B and the first end part C is less than or equal to one fourth of the length of the first stub 3111. In a specific solution, the distance between the second connection segment 113B and the first end part C is less than or equal to one eighth of the length of the first stub 3111.

In an implementation, a frequency band of the first resonance includes at least one communication frequency band in a frequency range from 698 MHz to 960 MHz, and a distance between an equivalent central position of the inductive structure 313 in the extension direction of the first stub 3111 and the first end part C is less than or equal to one eighth of a wavelength corresponding to a resonance frequency of the first resonance. The equivalent central position may be defined as a position of an inductive center of the inductive structure 313 or a center of a physical length of the inductive structure 313 on the first side edge, or a position of a vertical projection of the inductive center of the inductive structure 313 or the center of the physical length of the inductive structure 313 on the first stub 3111. In this solution, the distance between the equivalent central position of the inductive structure 313 on the first stub and the first end part is limited, to help adjust an electric field of the open end G of the first stub 3111 and an electric field of the first end part C. In general, the equivalent central position of the inductive structure 313 may be located at a midpoint of the first stub 3111, or between the midpoint of the first stub 3111 and the first end part C.

In an implementation, a frequency band of the first resonance includes at least one communication frequency band in a frequency range from 698 MHz to 960 MHz, and a distance between an equivalent central position of the inductive structure 313 in the extension direction of the first stub 3111 and the first end part C is less than or equal to 20 mm. In a possible implementation, a distance between an equivalent central position of the inductive structure 313 in the extension direction of the first stub 3111 and the first end part C is less than or equal to 15 mm.

In an implementation, a distance between an equivalent central position of the inductive structure 313 in the extension direction of the first stub 3111 and the first end part C is less than or equal to half of a length of the first stub 3111. In a possible implementation, a distance between an equivalent central position of the inductive structure 313 in the extension direction of the first stub 3111 and the first end part C is less than or equal to three eighths of a length of the first stub 3111.

In an implementation, an equivalent inductance value of the inductive structure 313 is a fixed value, and the equivalent inductance value of the inductive structure 313 is greater than or equal to 4 nH and less than or equal to 7 nH. In an implementation, an equivalent inductance value of the inductive structure 313 is adjustable, and the equivalent inductance value of the inductive structure 313 is greater than or equal to 2 nH and less than or equal to 7 nH. When the inductance of the inductive structure is the fixed value, optimization may be performed for one frequency band, and impact on another frequency band is small. When the inductance of the inductive structure is adjustable, different inductance values may be configured for different frequency bands, optimization is performed by frequency band, and an inductance value range is larger.

In this application, the equivalent inductance value of the inductive structure 313 is limited, to help adjust the electric field strength at the open end G of the first stub 3111 via the inductive structure 313 in the target frequency band (for example, a low frequency band), reduce impact on the hand model loading and absorption, and improve hand model performance.

In an implementation, a length of the main stub 1131 of the inductive structure 313 is less than a length of the first stub 3111. For example, a physical length of the main stub 1131 of the inductive structure 313 is less than 50 mm.

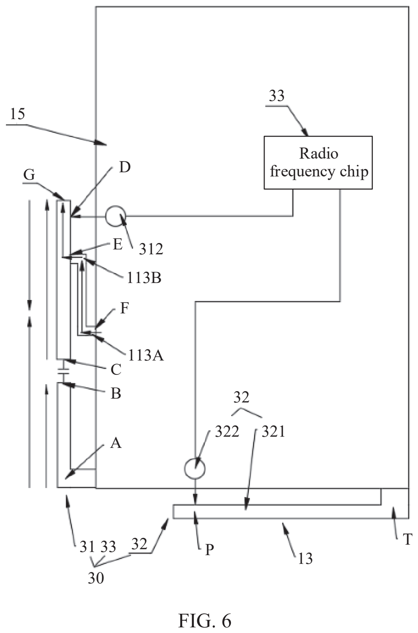

FIG. 6 is a diagram of a plane of a partial structural position relationship of a terminal device and a diagram of current distribution of each resonance mode of a first antenna according to an implementation of this application. A difference between the implementation shown in FIG. 6 and the implementation shown in FIG. 5A lies in that first positions on the first stub are different, and connection directions of the inductive structure 313 between the first position and the ground plane are different.

Refer to FIG. 6. In an implementation, in the extension direction of the first stub 3111, the second connection segment 113B is located between the first connection segment 113A and the first feeding point D. In this implementation, a direction of a current from the first feeding point D to the first position E on the first stub 3111 is the same as a direction of a current on the main stub 1131 of the inductive structure 313. In the implementation shown in FIG. 6, the first radiator 311 in the first antenna 31 may also be excited to generate currents in two modes, which are a quarter mode current and a three-quarter mode current. Specifically, the two current modes are the same as the current modes on the first radiator in the implementation provided in FIG. 5B. Details are not described again.

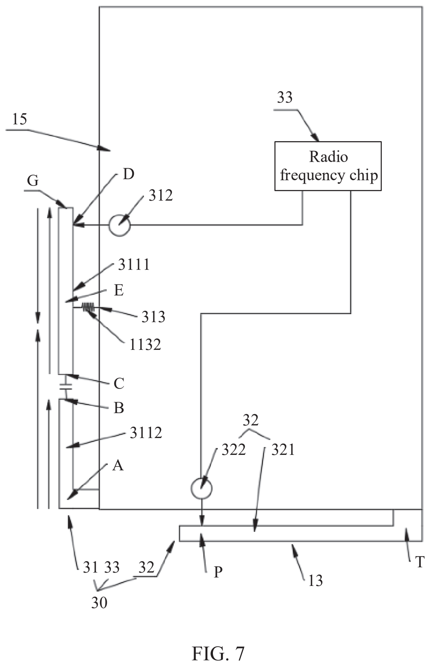

FIG. 7 is a diagram of a plane of a partial structural position relationship of a terminal device according to an implementation of this application. Refer to FIG. 7. In an implementation, the inductive structure 313 includes a lumped inductor 1132, and the lumped inductor 1132 is electrically connected between the first position E and the ground plane 15. In this implementation, the first position E is an equivalent central position of the inductive structure 313 in an extension direction of the first stub 3111. The equivalent central position may be defined as an inductive center or a center of a physical length of the inductive structure 313. In an implementation, a distance between the first position E and the first end part C is less than or equal to one eighth of a wavelength corresponding to a resonance frequency of the first resonance. In this solution, the distance between the equivalent central position of the inductive structure 313 on the first stub and the first end part C is limited, to help adjust an electric field of the open end G of the first stub 3111 and an electric field of the first end part C. In this solution, the lumped inductor 1132 is disposed between the first position E and the ground plane 15, so that an inductance value or electrical length of the inductive structure 313 is easy to adjust, and a position at which the lumped inductor 1132 is connected to the first stub 3111 is easy to adjust. In other words, the first position E may be disposed based on a specific requirement. Therefore, this solution helps the inductive structure 313 be more easily used to improve antenna efficiency of the antenna in a target frequency band, thereby improving hand model performance of the first antenna 31.

In an implementation, an equivalent inductance value of the lumped inductor 1132 is a fixed value, and the equivalent inductance value of the lumped inductor 1132 is greater than or equal to 4 nH and less than or equal to 7 nH. In an implementation, an equivalent inductance value of the lumped inductor 1132 is adjustable, and the equivalent inductance value of the lumped inductor 1132 is greater than or equal to 2 nH and less than or equal to 7 nH. In this application, the inductance value of the lumped inductor 1132 is limited, to help adjust the electric field strength at the open end G of the first stub 3111 via the inductive structure 313, reduce impact on the hand model loading and absorption, and improve hand model performance.

In an implementation, a distance between the first position E and the first end part C and the length CG of the first stub 3111 satisfy that EC/CG is less than 0.5. In an implementation, the length CG of the first stub 3111 is a quarter of a wavelength corresponding to a resonance frequency of the first resonance. In an implementation, EC/CG is less than 0.25. In an implementation, the length CG of the first stub 3111 is half of a wavelength corresponding to a resonance frequency of the first resonance. In general, a position of the first position E on the first stub 3111 may be located between the midpoint and the first end part C of the first stub 3111, and a distance between the first position E and the midpoint of the first stub may be greater than or equal to a distance between the first position and the first end part C. In other words, the first position is disposed closer to the first end part C. In this solution, the specific position of the first position E is limited, to help dispose the inductive structure 313. Therefore, the lumped inductor or a distributed inductive structure (the distributed inductive structure may be shown in FIG. 5A) in a range of the equivalent inductance value is loaded at an appropriate position of the first stub 3111 in the target frequency band.

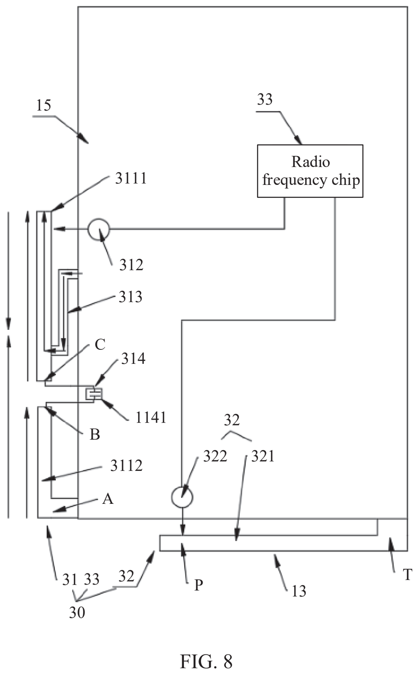

FIG. 8 is a diagram of a plane of a partial structural position relationship of a terminal device according to an implementation of this application. Refer to FIG. 8. In an implementation, the capacitive structure 314 includes a capacitive component 1141, the capacitive component 1141 is located at a position adjacent to the first side edge 11 in the terminal device 100 and disposed on a circuit board (which may be understood as that the position of the ground plane 15 in FIG. 8 is the circuit board), and two ends of the capacitive component 1141 are electrically connected to the first end part C and a second end part B end of the second stub 3112, respectively. A range of an equivalent capacitance value of the capacitive component 1141 is greater than or equal to 0.5 pF and less than or equal to 3 pF. In this solution, the capacitive structure 314 is disposed, and the range of the equivalent capacitance value of the capacitive structure 314 is limited, to help adjust the electric fields at the two positions of the open end G and the first end part C of the first stub 3111.

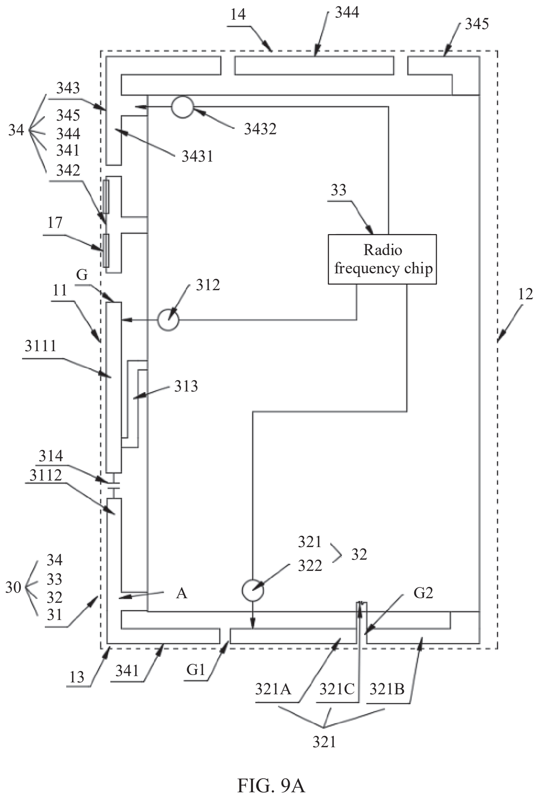

The antenna system in the terminal device provided in this application further includes another antenna disposed at a position of the side frame. FIG. 9A is a diagram of a plane of an antenna system in a terminal device according to an implementation of this application.

It should be understood that a medium-high frequency antenna operates on at least one communication frequency band in a middle frequency band (middle band, MB) (for example, from 1700 MHz to 2170 MHz) and/or a high frequency band (high band, HB) (for example, from 2300 MHz to 2700 MHz).

Refer to FIG. 9A. In an implementation, the antenna system 30 further includes a medium-high frequency antenna 34, and a part of the medium-high frequency antennas 34 are distributed on the third side edge 13. In an embodiment, the medium-high frequency antenna 34 includes a first unit 341, and most radiators in the first unit 341 are located on one side of the third side edge 13 and are located at a position between the second antenna 32 and the first antenna 31. The first unit 341 may be connected to the grounding point A of the second stub 3112 in the first antenna 31.

In an implementation, a part of the medium-high frequency antenna 34 is distributed on the first side edge 11. At least a part of the medium-high frequency antenna 34 distributed on the first side edge 11 is located on a side that is of the first antenna 31 and that is away from the third side edge 13. Specifically, the medium-high frequency antenna 34 includes a second unit 342 and/or a third unit 343. The second unit 342 is located at the top part of the first antenna 31, and the second unit 342 and the open end G of the first stub 3111 are spaced apart. The third unit 343 may be disposed at a joint between the first side edge 11 and the fourth side edge 14, a part of the third unit 343 is located at a top part of the first side edge 11, and a part of the third unit is located at a left end of the fourth side edge 14.

In an implementation, a part of the medium-high frequency antenna 34 is distributed on the fourth side edge 14. Specifically, the medium-high frequency antenna 34 includes a fourth unit 344 and/or a fifth unit 345. The fourth unit 344 is located at a middle part of the fourth side edge 14. The fifth unit 345 may be disposed at a right end of the fourth side edge 14, and the fifth unit 345 may be grounded via the hinge on the second side edge 12.

In an implementation, a button 17 is disposed on the first side edge 11, the button 17 is located on a side that is of the first stub 3111 and that is away from the second stub 3112, and the button 17 and the first stub 3111 are insulated from each other. A part of the medium-high frequency antennas 34 may be located at the button 17. As shown in FIG. 9A, the second unit 342 is disposed at a position of the button 17.

Refer to FIG. 9A. Units in the medium-high frequency antenna 34 may be a third antenna in the terminal device provided in this application. For example, the first unit 341, the second unit 342, the third unit 343, and the fourth unit 344 may be different third antennas, or two or more of the units may form one third antenna. An operating frequency band of the third antenna includes at least one communication frequency band in a frequency range from 1700 MHz to 2700 MHz.

In an implementation, the third antenna (formed by the third unit 343 in FIG. 9A) includes a third radiator 3431 and a third feeding structure 3432, and the third feeding structure 3432 is electrically connected to the radio frequency chip 33. In an implementation, the radio frequency chip 33 includes an integrated radio frequency circuit, and can simultaneously transmit radio frequency signals to a plurality of different antennas. In an implementation, the radio frequency chip 33 may include a plurality of small chips that are independent of each other, and the small chips transmit radio frequency signals to different antennas. For example, one small chip simultaneously transmits radio frequency signals to the first antenna and the second antenna, and another small chip transmits a radio frequency signal to the third antenna. In an implementation, at least a part of the third radiator 3431 is distributed on the fourth side edge 14. In an implementation, at least a part of the third radiator 3431 is distributed on the first side edge 11. The third radiator 3431 distributed on the first side edge 11 is located on a side that is of the first radiator 311 and that is away from the third side edge 13.

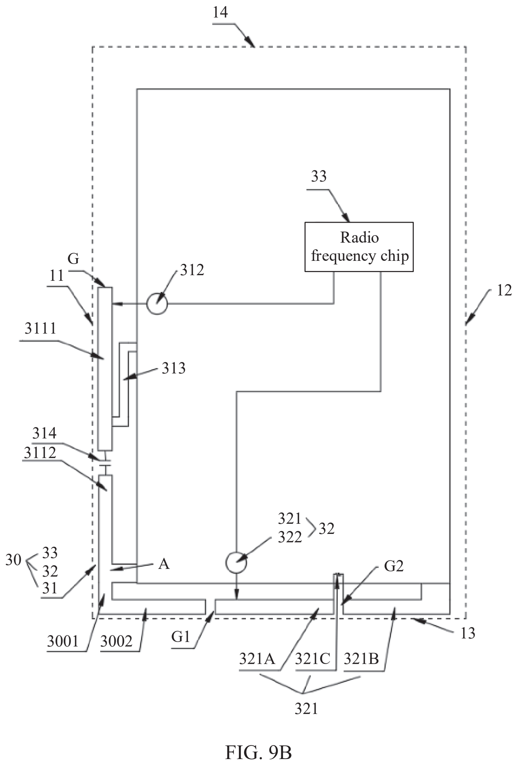

FIG. 9B is a diagram of a plane of an antenna system in a terminal device according to an implementation of this application. With reference to FIG. 9B and FIG. 5A, the implementation shown in FIG. 9B is similar to the implementation shown in FIG. 5A. Both the implementations include the first antenna 31, the second antenna 32, and the radio frequency chip 33. A difference between the antenna system provided in the implementation shown in FIG. 9B and the antenna system provided in the implementation shown in FIG. 5A is that specific structures of the second radiator 321 are different. The first antenna 31 in the antenna system provided in the implementation shown in FIG. 9B may be the same as the first antenna in the antenna system provided in the implementation shown in FIG. 5A. Therefore, a specific structure of the first antenna 31 is not described again. A design on the third side edge 13 in the implementation shown in FIG. 9B is different. The following provides a detailed description.

The second radiator 321 includes a first segment 321A, a second segment 321B, and a connection structure 321C. The first segment 321A and the second segment 321B are located on one side of the third side edge 13. The first segment 321A is located between a $2^{nd}$ stub 3002 and the second segment 321B. A first bottom gap G1 is formed at an end of the first segment 321A on the third side edge 13, and a second bottom gap G2 is formed between the other end of the first segment 321A and the second segment 321B. The connection structure 321C is connected between the first segment 321A and the second segment 321B. In an implementation, the first bottom gap G1 and the second bottom gap G2 are symmetrically distributed on two sides of a central position of the third side edge 13. In an implementation, a region between the first bottom gap G1 and the second bottom gap G2 is used to dispose a charging jack or a headset jack of the terminal device, or the like.

In an implementation, the connection structure 321C includes a 0-ohm component or a segment of transmission line structure, and two ends of the 0-ohm component or the segment of transmission line structure are respectively connected to the first segment 321A and the second segment 321B. In an implementation, the connection structure 321C includes an inductive component, a capacitive component, or a combination thereof that is disposed on a circuit board in the terminal device, and two ends of the inductive component, the capacitive component, or the combination thereof are respectively connected to the first segment 321A and the second segment 321B. It should be understood that the 0-ohm component, the transmission line, the inductive component, the capacitive component, or the like can adjust the electrical length of the second radiator 321 to some extent, to enable the second radiator 321 to generate a resonance (for example, the third resonance) in the target frequency band.

Refer to FIG. 9A. In an implementation, the second radiator 321 in the second antenna 32 in the antenna system 30 is of a segmented structure, and the second bottom gap G2 is formed between the first segment 321A and the second segment 321B. The second bottom gap G2 and the first bottom gap G1 are symmetrically distributed on the two sides of the central position of the third side edge 13. This design builds a symmetrical gap feature at a bottom of the terminal device, and helps improve use experience of the terminal device. In an implementation, the first bottom gap G1 and the second bottom gap G2 are respectively located on two sides of a jack (for example, a charging jack, a headset jack, or a SIM card jack) of the terminal device. This also helps improve symmetry of an external appearance feature of the bottom of the terminal device, and can improve use experience.

In an implementation, a difference between the antenna system provided in the implementation shown in FIG. 9B and the antenna system provided in the implementation shown in FIG. 5A further includes: a 1st stub 3001 and the 2nd stub 3002 are added. The antenna system includes the second radiator 321 disposed on the third side edge 13, the 1st stub 3001, and the 2nd stub 3002. The 1st stub 3001 and the 2nd stub 3002 are interconnected to form an L-shaped structure. The 1st stub 3001 is connected between the second stub 3112 of the first radiator 311 and the 2nd stub 3002. In an implementation, an extension direction of the 1st stub 3001 is the extension direction of the first side edge 11, and an extension direction of the 2nd stub 3002 is the extension direction of the third side edge 13. The first bottom gap G1 is formed between the 2nd stub 3002 and the first segment 321A.

Based on the implementation shown in FIG. 9B, in an implementation, the 1st stub 3001 and the 2nd stub 3002 may be a part of the first radiator 311 in the first antenna. In an implementation, the 1st stub 3001 and the 2nd stub 3002 may alternatively be a part of the second radiator 321 or a parasitic stub. In an implementation, the 1st stub 3001 and the 2nd stub 3002 may alternatively be used as a part of the medium-high frequency antenna 34 in the antenna system 30, for example, the first unit 341 in the medium-high frequency antenna 34. In an implementation, the 1st stub 3001 and the 2nd stub 3002 may alternatively not participate in radiation of any antenna, and are used only as a part of the middle frame of the terminal device.

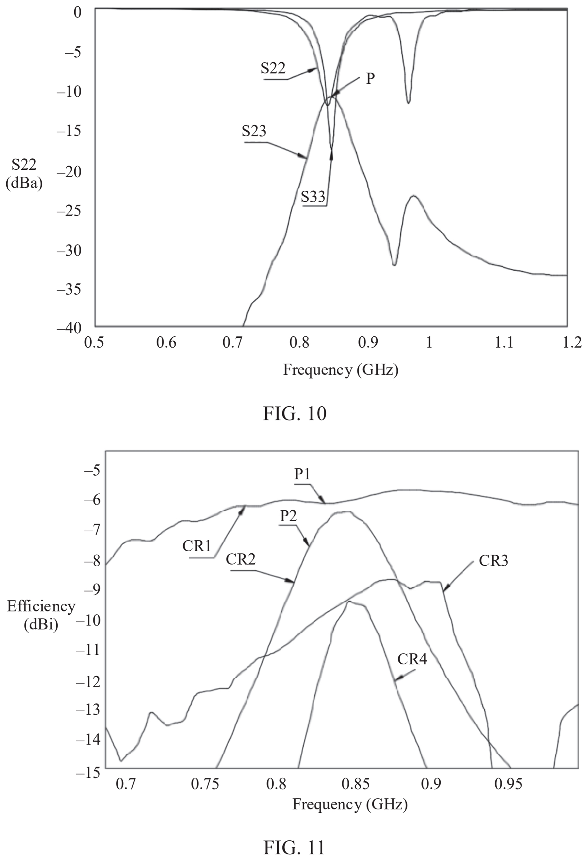

FIG. 10 is a diagram of S22 (output matching) of a first antenna and a second antenna in an antenna system in a terminal device according to an implementation of this application. In FIG. 10, a curve S22 represents a return loss of the first antenna, a curve S33 represents a return loss of the second antenna, and a curve S23 represents isolation between the first antenna and the second antenna. At a position of a point P, when a resonance frequency is 0.85007 GHz, the return loss of the first antenna is -11.112 dBa, and the return loss of the second antenna is smaller and close to -20 dBa. It can be seen from FIG. 10 that, in the terminal device provided in embodiments of this application, in a range of resonance frequency bands of the first antenna and the second antenna in the antenna system, return losses of the first antenna and the second antenna are both less than -10 dB. This can meet a requirement on antenna radiation performance, ensure isolation between the first antenna and the second antenna, and meet signal receiving and sending performance of the first antenna and the second antenna.

FIG. 11 is a diagram of system total efficiency and radiation efficiency of a first antenna and a second antenna in an antenna system in a terminal device according to an implementation of this application. A curve CR1 represents a curve of total efficiency of the antenna system according to this implementation of this application. At a position of a point P1, when a resonance frequency is 0.83341 GHz, total efficiency of the antenna system is -6.1703 dBi. A curve CR2 represents a curve of radiation efficiency of the antenna system according to this implementation of this application. At a position of a point P2, when a resonance frequency is 0.824GHz, radiation efficiency of the antenna system is -7.6335 dBi. CR3 represents a curve of total efficiency of an antenna system according to a conventional solution, and CR4 represents a curve of radiation efficiency of the antenna system according to the conventional solution. The four curves are compared, and it can be seen that the antenna system provided in this application has better total efficiency and radiation efficiency.

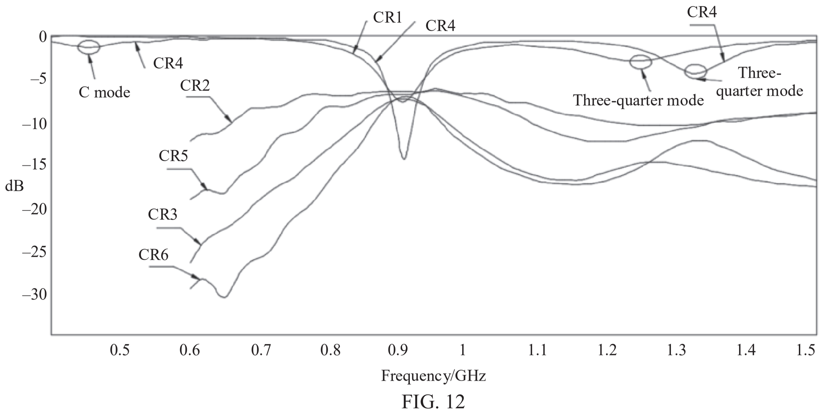

FIG. 12 is a diagram of comparison between a first antenna in which an inductive structure is disposed in an antenna system in a terminal device according to an implementation of this application and a first antenna in which no inductive structure is disposed. A curve CR1 represents a curve of a return loss of the first antenna in which no inductive structure is disposed in the antenna system. A curve CR2 represents a curve of radiation efficiency of the first antenna in which no inductive structure is disposed in the antenna system. A curve CR3 represents a curve of system total efficiency of the first antenna in which no inductive structure is disposed in the antenna system. A curve CR4 represents a curve of a return loss of the first antenna in which the inductive structure is disposed in the antenna system in this application. A curve CR5 represents a curve of radiation efficiency of the first antenna in which the inductive structure is disposed in the antenna system in this application. A curve CR6 represents a curve of system total efficiency of the first antenna in which the inductive structure is disposed in the antenna system in this application. In FIG. 12, a part circled by a dashed ellipse at a position of a left end of the curve CR4 represents a C mode resonance excited by the inductive structure, and is marked by a C mode in the figure. A part circled by a dashed ellipse at a position of a right end of the curve CR4 represents a three-quarter mode resonance excited by the first antenna, and is marked by a three-quarter mode in the figure. A part circled by a dashed ellipse at a position of a right end of the curve CR1 represents a three-quarter mode resonance excited by the first antenna, and is marked by a three-quarter mode in the figure.

The curve CR4 is compared with the curve CR1, and it can be seen that the inductive structure is disposed in this application, to not only have a high loading function on the three-quarter mode, but also can implement the quarter mode resonance (C mode resonance) mode from the first feeding point to the ground via the inductive structure. It may also be understood that, in this application, the inductive structure can be excited to generate the C mode resonance (while the solution shown in the curve CR1 in which no inductive structure is disposed cannot generate the C mode resonance). Therefore, the inductive structure is introduced in this application, to help improve hand model performance of the first antenna.

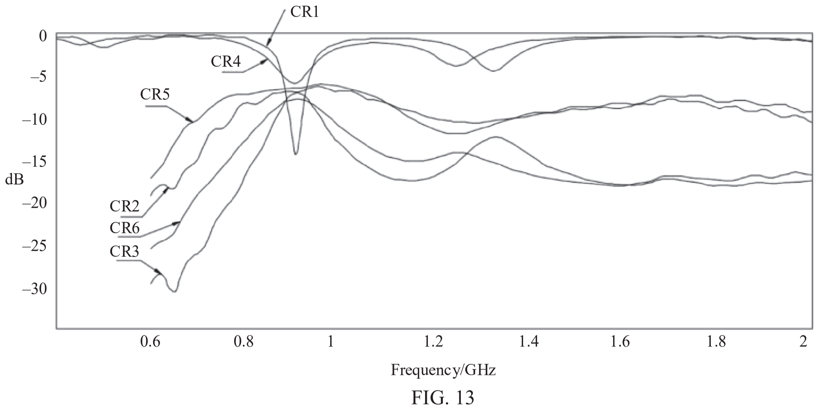

FIG. 13 is a diagram of comparison between a connection manner in which the inductive structure in the implementation shown in FIG. 5B is used and a connection manner in which the inductive structure in the implementation shown in FIG. 6 is used in a terminal device according to an implementation of this application. A curve CR1 in FIG. 13 represents a curve of a return loss of the first antenna in the connection manner in which the inductive structure in the implementation shown in FIG. 5B is used. A curve CR2 in FIG. 13 represents a curve of radiation efficiency of the first antenna in the connection manner in which the inductive structure in the implementation shown in FIG. 5B is used. A curve CR3 in FIG. 13 represents a curve of system total efficiency of the first antenna in the connection manner in which the inductive structure in the implementation shown in FIG. 5B is used. A curve CR4 in FIG. 13 represents a curve of a return loss of the first antenna in the connection manner in which the inductive structure in the implementation shown in FIG. 6 is used. A curve CR5 in FIG. 13 represents a curve of radiation efficiency of the first antenna in the connection manner in which the inductive structure in the implementation shown in FIG. 6 is used. A curve CR6 in FIG. 13 represents a curve of system total efficiency of the first antenna in the connection manner in which the inductive structure in the implementation shown in FIG. 6 is used. It can be seen from FIG. 13 that both the connection manner in which the inductive structure in the implementation shown in FIG. 5B is used and the connection manner in which the inductive structure in the implementation shown in FIG. 6 is used can implement a high loading function on the three-quarter mode, and can be used to excite generation of the quarter mode resonance (C mode resonance), thereby helping improve hand model performance of the first antenna.

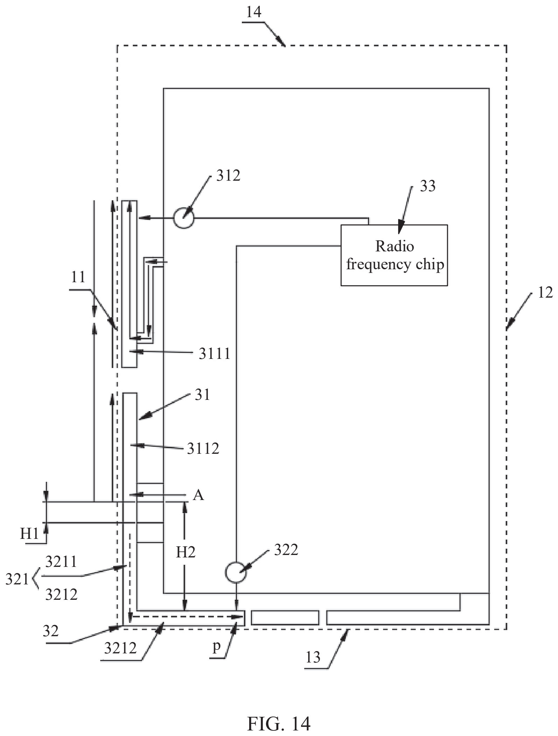

FIG. 14 is a diagram of an architecture of an antenna system in a terminal device according to an implementation of this application. In this implementation, a basic architecture of the first antenna 31 is the same as that of the first antenna in the implementation shown in FIG. 5B. A position of the first radiator 311 in the first antenna 31 on the first side edge 11 is moved upward compared with that in the implementation shown in FIG. 5B, so that a part of the second radiator 321 in the second antenna 32 can be disposed on the first side edge 11. In the extension direction of the first side edge 11, the part of the second radiator 321 in the second antenna 32 is disposed at a bottom part of the first radiator 311 in the first antenna 31, and the other part of the second radiator 321 is located on the third side edge 13. In other words, the second radiator 321 is distributed on the first side edge 11 and the third side edge 13. Specifically, the second radiator 321 extends from the first side edge 11 to the third side edge 13, the second radiator 321 includes a first part 3211 and a second part 3212 that are interconnected as a whole, the second part 3212 is located on the third side edge 13, the first part 3211 is located on the first side edge 11, an end that is of the first part 3211 and that is away from the second part 3212 is connected to the second stub 3112 of the first radiator 311 and is grounded, and the second feeding point P of the second radiator 321 is located at an end that is of the second part 3212 and that is away from the first part 3211. In the implementation shown in FIG. 14, a mode excited by the first antenna 31 is inclined to a transverse mode, and a mode excited by the second antenna 32 is inclined to a longitudinal mode. This can also obtain a low ECC between the first antenna 31 and the second antenna 32, for example, the ECC may be 0.3.

In the implementation shown in FIG. 14, the second feeding point P of the second radiator 321 in the second antenna 32 is located at an open end of the second radiator 321. In this solution, the second radiator 321 is disposed at a position of a corner of the first side edge and the third side edge. When the terminal device is in a folded state, impact of cavity clutter generated by a cavity formed between the first body and the second body on the antenna can be reduced. A direction of a current on the second radiator 321 may be flowing downward from an end that is of the first part 3211 and that is adjacent to the grounding point A of the second stub 3112 in the extension direction of the first side edge 11 to an end of the second part 3212, and then extending rightward from the end of the second part 3212 in the extension direction of the third side edge 13 to the second feeding point P. In the extension direction of the first side edge 11, a distance H2 between the grounding point A of the second stub 3112 in the first antenna 31 and the second part 3212 of the second radiator 321 in the second antenna 32 and a distance H1 between the grounding point A of the second stub 3112 in the first antenna 31 and the first part 3211 of the second radiator 321 determine a current mode of and isolation between the first antenna 31 and the second antenna 32. In a specific implementation, the distance H2 between the grounding point A of the second stub 3112 in the first antenna 31 and the second part 3212 of the second radiator 321 in the second antenna 32 is between 30 mm and 40 mm, and the distance H1 between the grounding point A of the second stub 3112 in the first antenna 31 and the first part 3211 of the second radiator 321 is greater than 10 mm.

In the implementation shown in FIG. 14, a medium-high frequency antenna may be disposed on the antenna system on the third side edge 13. For example, the medium-high frequency antenna is disposed on a right side of the second feeding point P.

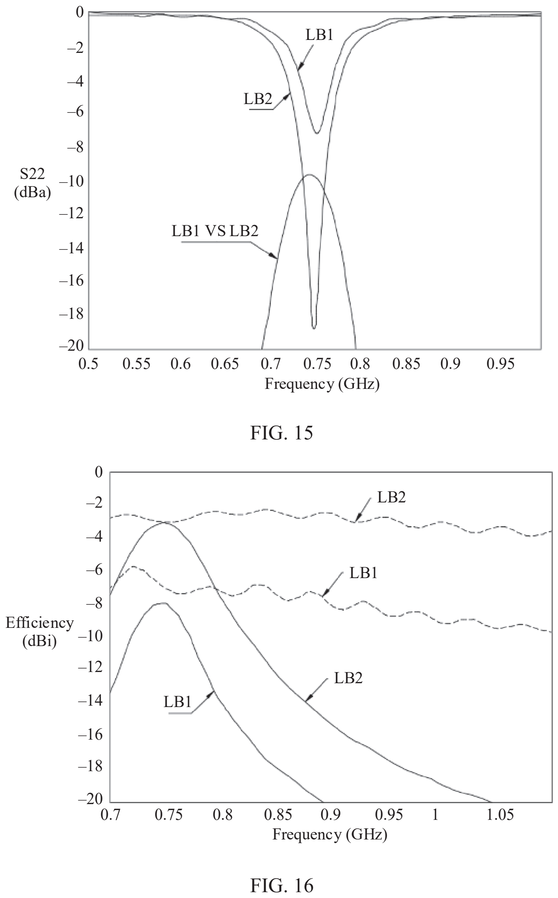

FIG. 15 is curves of S22 (output matching) of the first antenna and the second antenna and a curve of isolation between the first antenna and the second antenna in the antenna system in the terminal device according to the implementation shown in FIG. 14. In FIG. 15, a curve LB1 represents an output loss of the first antenna, a curve LB2 represents an output loss of the second antenna, and LB1 VS LB2 represents isolation between the first antenna and the second antenna. It can be seen from FIG. 15 that, in this implementation, both the first antenna and the second antenna have a low output loss, and isolation between the first antenna and the second antenna also meets a requirement.

FIG. 16 is a diagram of curves of system total efficiency and radiation efficiency of the antenna system in the terminal device according to the implementation shown in FIG. 14. In FIG. 16, a curve represented by a solid line and marked by LB1 represents radiation efficiency of the first antenna, a curve represented by a dashed line and marked by LB1 represents system total efficiency of the first antenna, a curve represented by a solid line and marked by LB2 represents radiation efficiency of the second antenna, and a curve represented by a dashed line and marked by LB2 represents system total efficiency of the second antenna. It can be seen from FIG. 16 that total efficiency of the first antenna and the second antenna and radiation efficiency of the first antenna and the second antenna all meet antenna design requirements.

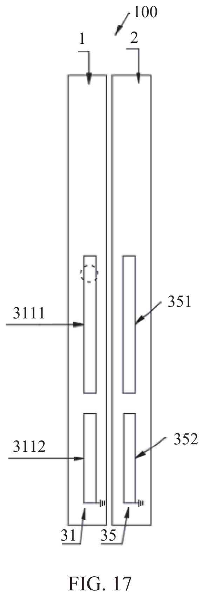

Refer to FIG. 17. In an implementation, the terminal device 100 is designed in a foldable manner. FIG. 17 is a diagram of an antenna system in the terminal device 100 in a state in which the first body 1 and the second body 2 are folded relative to each other. Structural features of the first radiator 311 in the first antenna on the first body 1 and the parasitic stub on the second body 2 are shown from a side edge. In this implementation, in addition to including the first antenna 31 and the second antenna 32 disposed in the first body 1, the antenna system further includes the parasitic stub 35, and the parasitic stub 35 is disposed on the second body 2. The parasitic stub 35 and the first antenna 31 are stacked when the terminal device 100 is in the folded state, the parasitic stub 35 includes a first branch 351 and a second branch 352, the first branch 351 and the second branch 352 are spaced apart, one end that is of the first branch 351 and that is adjacent to the second branch 352 is grounded, one end that is of the second branch 352 and that is away from the first branch 351 is grounded, and when the terminal device 100 is in the folded state, the first branch 351 and the first stub 3111 are stacked and opposite to each other and the second branch 352 and the second stub 3112 are stacked and opposite to each other. A spacing between the parasitic stub 35 and the first antenna 31 is used to couple a current of the first antenna 31 to the parasitic stub 35, so that when the first antenna 31 is excited, the parasitic stub 35 can be excited to generate a C mode resonance, thereby improving hand model performance.

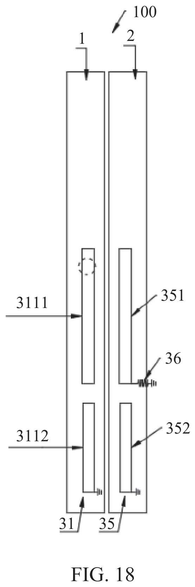

FIG. 18 is a diagram of an antenna system in a terminal device in a state in which a first body and a second body are folded relative to each other. A difference between the implementation shown in FIG. 18 and the implementation shown in FIG. 17 lies in that the antenna system in the implementation provided in FIG. 18 is the antenna system provided in FIG. 17 to which an inductive structure 36 is added. The inductive structure 36 is connected between the parasitic stub 35 and the ground plane. The inductive structure 36 may be disposed to adjust electric fields at positions of gaps at two ends of the first branch 351, and help improve efficiency of a right-hand mode of the antenna system. A range of an inductance value of the inductive structure 36 is greater than or equal to 2 nH and less than or equal to 7 nH. For example, the inductance value of the inductive structure 36 may be 3 nH.

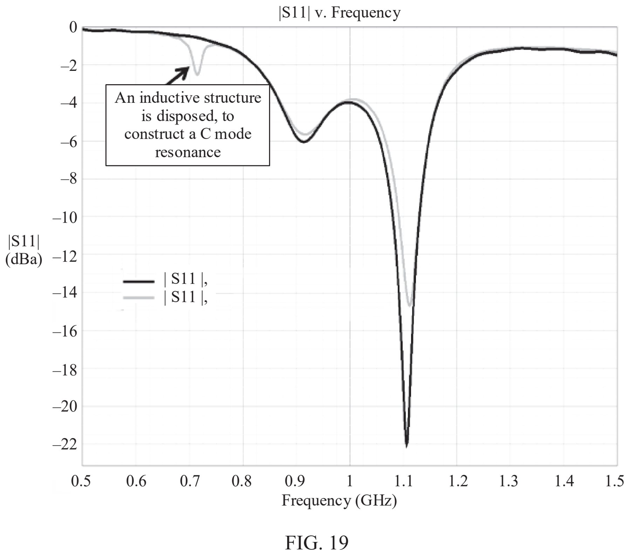

FIG. 19 is a diagram of comparison between an S11 curve of the antenna system according to the implementation shown in FIG. 17 and an S11 curve of the antenna system according to the implementation shown in FIG. 18. To be specific, one of the two curves is in a state in which no inductive structure is added, and the other is in a state in which an inductive structure is added. It can be seen from FIG. 19 that the inductive structure can construct the C mode resonance. Therefore, the inductive structure is added and connected between the parasitic stub and the ground plane, to improve efficiency of a right-hand mode of the first antenna.

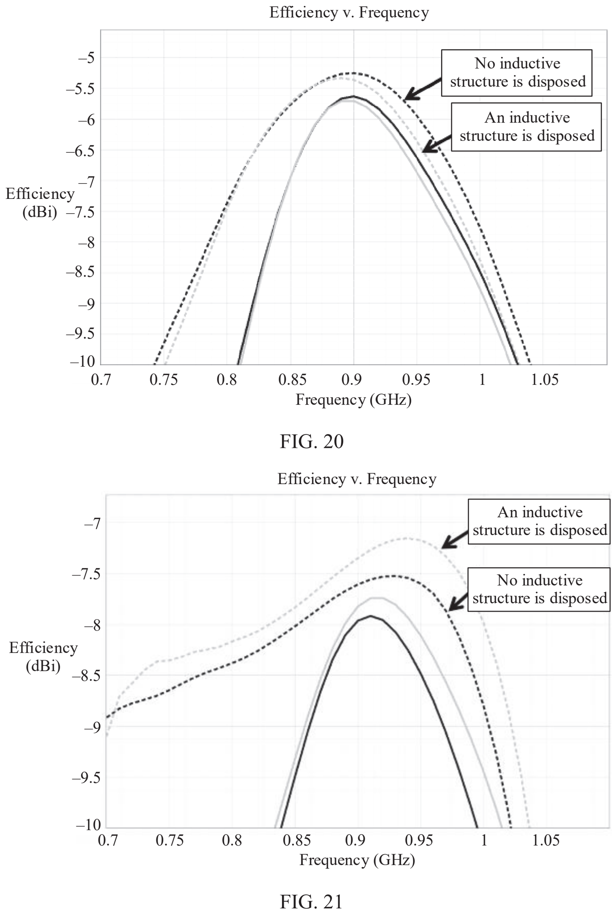

FIG. 20 is a diagram of comparison between radiation efficiency and system efficiency of the antenna system according to the implementation shown in FIG. 17 and radiation efficiency and system efficiency of the antenna system according to the implementation shown in FIG. 18 in a left-handed mode. Dashed lines represent system total efficiency, and solid lines represent radiation efficiency. One of the two dashed lines is in a state in which no inductor is added, and the other is in a state in which an inductor is added. Similarly, one of the two solid lines is in the state in which no inductive structure is added, and the other is in the state in which an inductive structure is added.

FIG. 21 is a diagram of comparison between radiation efficiency and system efficiency of the antenna system according to the implementation shown in FIG. 17 and radiation efficiency and system efficiency of the antenna system according to the implementation shown in FIG. 18 in a right-handed mode. Dashed lines represent system total efficiency, and solid lines represent radiation efficiency. One of the two dashed lines is in a state in which no inductor is added, and the other is in a state in which an inductor is added. Similarly, one of the two solid lines is in the state in which no inductive structure is added, and the other is in the state in which an inductive structure is added.

In the foregoing implementations of this application, a specific grounding manner of each grounding point or stub that needs to be grounded may be as follows: The grounding point or stub is pressed by a spring and electrically connected to the ground plane in the terminal device, or may be fastened (for example, welded) to the ground plane by disposing the grounding stub at a position of each grounding point.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. When no conflict occurs, the possible implementations of this application and the features in the possible implementations may be mutually combined. Therefore, the protection scope of this application shall be subject to the protection scope of the claims.

**Claims**

1. A terminal device, comprising:

   a device body, comprising a first body, a second body, and a hinge, wherein the first body and the second body are connected via the hinge, so that the first body and the second body can be folded or unfolded relative to each other, the first body comprises a first side edge, a second side edge, and a third side edge, the first side edge and the second side edge are disposed opposite to each other, the third side edge is connected between the first side edge and the second side edge, and the second side edge is configured to dispose the hinge; and
   an antenna system, comprising a first antenna, a second antenna, and a radio frequency chip, wherein the first antenna, the second antenna, and the radio frequency chip are all disposed in the first body, the first antenna is configured to generate a first resonance, and the second antenna is configured to generate a second resonance;
   the first antenna comprises a first radiator and a first feeding structure, at least a part of the first radiator is distributed on the first side edge, the second antenna comprises a second radiator and a second feeding structure, at least a part of the second radiator is distributed on the third side edge, and the first feeding structure and the second feeding structure are electrically connected to the radio frequency chip; and
the first antenna further comprises an inductive structure and a capacitive structure, the first radiator comprises a first stub and a second stub, the first stub and at least a part of the second stub are distributed at a spacing at different regions of the first side edge, at least the part of the second stub is located on a side that is of the first stub and that is adjacent to the third side edge, an end that is of the first stub and that is away from the second stub is an open end, the first stub comprises a first feeding point, a first position, and a first end part, the first feeding point is electrically connected to the first feeding structure, the inductive structure is electrically connected between the first position and a ground plane, the second stub comprises a second end part and a grounding point, the grounding point and the second end part are spaced apart, and the second end part and the first end part are coupled via the capacitive structure.

2. The terminal device according to claim 1, wherein one of the first antenna and the second antenna is a main antenna, and the other of the first antenna and the second antenna is a diversity antenna.

3. The terminal device according to claim 1 or 2, wherein all regions of the second stub are distributed on the first side edge, and the grounding point is located at a position that is of the second stub and that is adjacent to the third side edge.

4. The terminal device according to any one of claims 1 to 3, wherein the first feeding point, the first position, and the first end part are sequentially arranged in an extension direction of the first side edge on the first stub, a part that is of the first stub and that is from the first feeding point to the first position and the inductive structure are configured to jointly generate a third resonance, a frequency difference between the third resonance and the first resonance is f, and the first resonance is f1, wherein $35\% \leq f'/f1 \leq 60\%$.

5. The terminal device according to any one of claims 1 to 3, wherein a frequency band of the first resonance comprises at least one communication frequency band in a frequency range from 698 MHz to 960 MHz, the first feeding point, the first position, and the first end part are sequentially arranged in an extension direction of the first side edge on the first stub, a part that is of the first stub and that is from the first feeding point to the first position and the inductive structure are configured to jointly generate a third resonance, and a frequency difference between the third resonance and the first resonance is in a range from 300 MHz to 500 MHz.

6. The terminal device according to claim 5, wherein a frequency band of the second resonance comprises at least one communication frequency band in the frequency range from 698 MHz to 960 MHz.

7. The terminal device according to any one of claims 1 to 6, wherein the inductive structure comprises a first connection segment, a second connection segment, and a main stub connected between the first connection segment and the second connection segment, the first connection segment is connected between one end of the main stub and the ground plane, and the second connection segment is connected between the other end of the main stub and the first position.

8. The terminal device according to claim 7, wherein in an extension direction of the first stub, the first connection segment is located between the second connection segment and the first feeding point; or the second connection segment is located between the first connection segment and the first feeding point.

9. The terminal device according to claim 7 or 8, wherein in the extension direction of the first stub, the first connection segment is located between the second connection segment and the first feeding point, and a distance between the second connection segment and the first end part is less than or equal to a quarter of a length of the first stub.

10. The terminal device according to claim 4, wherein the inductive structure comprises a lumped inductor, and the lumped inductor is electrically connected between the first position and the ground plane.

11. The terminal device according to any one of claims 1 to 10, wherein a distance between an equivalent central position of the inductive structure in the extension direction of the first stub and the first end part is less than or equal to one eighth of a wavelength corresponding to a resonance frequency of the first resonance.

12. The terminal device according to any one of claims 1 to 10, wherein

the frequency band of the first resonance comprises the at least one communication frequency band in the frequency range from 698 MHz to 960 MHz, and a distance between an equivalent central position of the inductive structure in the extension direction of the first stub and the first end part is less than or equal to 20 mm; or a distance between an equivalent central position of the inductive structure in the extension direction of the first stub and the first end part is less than or equal to half of the length of the first stub.

13. The terminal device according to any one of claims 1 to 12, wherein an equivalent inductance value of the inductive structure is a fixed value, and a range of the equivalent inductance value is greater than or equal to 4 nH and less than or equal to 7 nH; or an equivalent inductance value of the inductive structure is adjustable, and a range of the equivalent inductance value is greater than or equal to 2 nH and less than or equal to 7 nH.

14. The terminal device according to any one of claims 1 to 11, wherein the length of the first stub is between a quarter and half of the wavelength corresponding to the resonance frequency of the first resonance, and a length of the second stub is between one sixth and a quarter of the wavelength corresponding to the resonance frequency of the first resonance.

15. The antenna according to any one of claims 1 to 14, wherein a range of a ratio of the length of the first stub to the length of the second stub is greater than or equal to 1/3 and less than or equal to 1.

16. The terminal device according to any one of claims 1 to 15, wherein a range of an equivalent capacitance value of the capacitive structure is greater than or equal to 0.5 pF and less than or equal to 3 pF.

17. The terminal device according to claim 16, wherein the capacitive structure comprises a capacitive component, the capacitive component is located on an inner side of the first side edge and disposed on a circuit board, and two ends of the capacitive component are electrically connected to the first end part and the second end part respectively.

18. The terminal device according to any one of claims 1 to 17, wherein all parts of the second radiator are located on the third side edge.

19. The terminal device according to claim 18, wherein a second feeding point is disposed on the second radiator, the second feeding point is electrically connected to the second feeding structure, a first end of the second radiator is an open end, a second end of the second radiator is a ground end, the ground end is adjacent to the second side edge relative to the open end of the second radiator, and an extension direction of the second radiator is perpendicular to the extension direction of the first side edge.

20. The terminal device according to any one of claims 1 to 19, wherein the second radiator extends from the first side edge to the third side edge, the second radiator comprises a first part and a second part that are interconnected as a whole, the second part is located on the third side edge, the first part is located on the first side edge, an end that is of the first part and that is away from the second part is connected to the second stub of the first radiator and is grounded, and the second feeding point of the second radiator is located on the second part.

21. The terminal device according to any one of claims 1 to 20, wherein the first body further comprises a fourth side edge, the fourth side edge and the third side edge are disposed opposite to each other, the antenna system further comprises a third antenna, an operating frequency band of the third antenna comprises at least one communication frequency band in a frequency range from 1700 MHz to 2700 MHz, the third antenna comprises a third radiator and a third feeding structure, and the third feeding structure is electrically connected to the radio frequency chip; and
at least a part of the third radiator is distributed on the fourth side edge; or at least a part of the third radiator is distributed on the first side edge, and the third radiator distributed on the first side edge is located on a side that is of the first radiator and that is away from the third side edge.

22. The terminal device according to claim 21, wherein a button is disposed on the first side edge, the button is located on a side that is of the first stub and that is away from the second stub, the button and the first stub are insulated from each other, and the part of the third radiator is located at the button.

23. The terminal device according to claim 21 or 22, wherein at least a part of the third radiator is located on the third side edge, and is located at a position between the second radiator and the first radiator.

24. The terminal device according to any one of claims 1 to 23, wherein the terminal device is a smartphone; or when the terminal device is in a folded state, the first side edge is a long edge, the third side edge is a short edge, a size range of the first side edge is less than or equal to 170 mm, and a size range of the third side edge is less than or equal to 80 mm.

25. An antenna, comprising a first feeding structure, a first radiator, an inductive structure, and a capacitive structure, wherein the first radiator comprises a first stub and a second stub, the first stub and the second stub are distributed at a spacing, an end that is of the first stub and that is away from the second stub is an open end, the first stub comprises a first feeding point, a first position, and a first end part, the first feeding point is electrically connected to the first feeding structure, the inductive structure is electrically connected between the first position and a ground plane, the second stub comprises a second end part and a grounding point, the grounding point and the second end part are spaced apart, the second end part and the first end part are coupled via the capacitive structure, and the antenna is configured to generate a first resonance; and a part that is of the first stub and that is from the first feeding point to the first position and the inductive structure are configured to jointly generate a third resonance, a frequency difference between the third resonance and the first resonance is f, and the first resonance is f1, wherein $35\% \leq f'/f1 \leq 60\%$.

26. The antenna according to claim 25, wherein the inductive structure comprises a first connection segment, a second connection segment, and a main stub connected between the first connection segment and the second connection segment, the first connection segment is connected between one end of the main stub and the ground plane, and the second connection segment is connected between the other end of the main stub and the first position.

27. The antenna according to claim 26, wherein in an extension direction of the first stub, the first connection segment is located between the second connection segment and the first feeding point; or the second connection segment is located between the first connection segment and the first feeding point.

28. The antenna according to claim 26, wherein in the extension direction of the first stub, the first connection segment is located between the second connection segment and the first feeding point, and a distance between the second connection segment and the first end part is less than or equal to a quarter of a length of the first stub.

29. The antenna according to claim 25, wherein the inductive structure comprises a lumped inductor, and the lumped inductor is electrically connected between the first position and the ground plane.

30. The antenna according to any one of claims 25 to 29, wherein a frequency band of the first resonance comprises at least one communication frequency band in a frequency range from 698 MHz to 960 MHz, and a distance between an equivalent central position of the inductive structure in the extension direction of the first stub and the first end part is less than or equal to 20 mm; or

a distance between an equivalent central position of the inductive structure in the extension direction of the first stub and the first end part is less than or equal to half of the length of the first stub.

31. The antenna according to any one of claims 25 to 30, wherein the frequency band of the first resonance comprises the at least one communication frequency band in the frequency range from 698 MHz to 960 MHz.

32. The antenna according to claim 31, wherein an equivalent inductance value of the inductive structure is a fixed value, and a range of the equivalent inductance value is greater than or equal to 4 nH and less than or equal to 7 nH; or an equivalent inductance value of the inductive structure is adjustable, and a range of the equivalent inductance value is greater than or equal to 2 nH and less than or equal to 7 nH.

33. The antenna according to claim 31, wherein the frequency difference between the third resonance and the first resonance is in a range from 300 MHz to 500 MHz.

34. The antenna according to any one of claims 25 to 33, wherein the length of the first stub is between a quarter and half of a wavelength corresponding to a resonance frequency of the first resonance, and a length of the second stub is between one sixth and a quarter of the wavelength corresponding to the resonance frequency of the first resonance.

35. The antenna according to any one of claims 25 to 34, wherein a range of a ratio of the length of the first stub to the length of the second stub is greater than or equal to 1/3 and less than or equal to 1.

36. The antenna according to any one of claims 25 to 35, wherein a range of an equivalent capacitance value of the capacitive structure is greater than or equal to 0.5 pF and less than or equal to 3 pF.

37. The antenna according to claim 36, wherein when a frequency of the first resonance is 960 MHz, a range of a frequency of a three-quarter mode excited by the antenna is between 135% of the frequency of the first resonance and 160% of the frequency of the first resonance.

20

201 202 203

100

1 3 2

10

FIG. 1A

100

3

1

2

FIG. 1B

FIG. 2A

FIG. 2B

FIG. 3A

FIG. 3B

Radiator

Matching circuit

Radiator

Matching circuit

Antenna tuning switch

Circuit side TAS switch

Radio frequency front end chip

Switch assembly

Transmit path

Switch

Duplexer

Power amplifier

PA

Receive path

Switch

Filter

Low noise amplifier

LN

Switch

Filter

Low noise amplifier

LN

Transceiver

Baseband chip

FIG. 4

FIG. 5A

FIG. 5B

FIG. 6

FIG. 7

15

3111

33

Radio
frequency chip

312

313

C

314

1141

B

32

322    321

3112

A

31 33    32

P

13

T

30

FIG. 8

FIG. 9A

FIG. 9B

FIG. 10

FIG. 11

FIG. 12

FIG. 13

FIG. 14

FIG. 15

FIG. 16

FIG. 17

FIG. 18

FIG. 19

Efficiency v. Frequency

FIG. 20

Efficiency v. Frequency

FIG. 21

## INTERNATIONAL SEARCH REPORT

| International application No. |
|---|
| **PCT/CN2024/134587** |

| A. | CLASSIFICATION OF SUBJECT MATTER |
|---|---|

H01Q 1/38(2006.01)i

According to International Patent Classification (IPC) or to both national classification and IPC

| B. | FIELDS SEARCHED |
|---|---|

Minimum documentation searched (classification system followed by classification symbols)

IPC:H01Q

Documentation searched other than minimum documentation to the extent that such documents are included in the fields searched

Electronic data base consulted during the international search (name of data base and, where practicable, search terms used)

CNTXT, ENTXTC, CJFD, CNKI, VEN, ENTXT, IEEE: 第一天线, 第二天线, 垂直, 正交, 电容, 容性, 电感, 感性, mimo, 低频, 主集天线, 分集天线, ECC, 相关包络系数, 相关系数, 相关性, 信号相关系数, first antenna, second antenna, vertical, orthogonal, capacitance, capacitor, inductive, inductance, diversity, envelope correlation coefficient

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 221900171 U (HUAWEI TECHNOLOGIES CO., LTD.) 25 October 2024 (2024-10-25) description, paragraphs 109-186, and figures 1A-21 | 1-37 |
| Y | CN 109755727 A (HUAWEI TECHNOLOGIES CO., LTD.) 14 May 2019 (2019-05-14) description, paragraphs 41-67, and figures 1-10 | 1-37 |
| Y | CN 116666966 A (GUANGDONG OPPO MOBILE TELECOMMUNICATIONS CORP., LTD.) 29 August 2023 (2023-08-29) description, paragraphs 44-184, and figures 1-24 | 1-37 |
| Y | CN 107919526 A (AAC TECHNOLOGIES (NANJING) INC.) 17 April 2018 (2018-04-17) description, paragraphs 46-66, and figures 1-7 | 1-37 |
| PY | CN 118281562 A (GUANGDONG OPPO MOBILE TELECOMMUNICATIONS CORP., LTD.) 02 July 2024 (2024-07-02) description, paragraphs 40-128, and figures 1-20 | 1-37 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2025** | **24 February 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/134587** |

| Patent document cited in search report | | | Publication date (day/month/year) | Patent family member(s) | | | Publication date (day/month/year) |
| --- | --- | --- | --- | --- | --- | --- | --- |
| CN | 221900171 | U | 25 October 2024 | None | | | |
| CN | 109755727 | A | 14 May 2019 | WO | 2020134870 | A1 | 02 July 2020 |
| CN | 116666966 | A | 29 August 2023 | None | | | |
| CN | 107919526 | A | 17 April 2018 | None | | | |
| CN | 118281562 | A | 02 July 2024 | None | | | |

Form PCT/ISA/210 (patent family annex) (July 2022)

**EP 4 734 282 A1**

**REFERENCES CITED IN THE DESCRIPTION**

**Patent documents cited in the description**

- CN 202311626326

- CN 202410785688